# NOUVEAU FASCICULE DE BREVET EUROPEEN

(11) **EP 2 456 791 B2**
(45) Date de publication et mention de la décision concernant l'opposition: **21.08.2019**
(45) Mention de la délivrance du brevet: 21.08.2013
(21) Numéro de dépôt: 10732881.7
(22) Date de dépôt: 15.07.2010
(51) Int. Cl.: C08F 2/24, C08F 265/04, C09D 151/00

(54) **DISPERSION AQUEUSE DE POLYMÈRE AUTORÉTICULABLE, À BASE DE PARTICULES DE POLYMÈRE STRUCTURÉES EN COEUR DUR ET ÉCORCE MOLLE ET COMPOSITIONS DE REVÊTEMENTS OU DE TRAITEMENT**
WÄSSRIGE SELBSTVERNETZBARE POLYMERDISPERSION AUS POLYMERPARTIKELN MIT HARTEM KERN UND WEICHER HÜLLE UND BESCHICHTUNGS- ODER BEHANDLUNGSZUSAMMENSETZUNGEN
AQUEOUS SELF-CROSSLINKABLE POLYMER DISPERSION MADE FROM HARD-CORE, SOFT-SHELL STRUCTURED POLYMER PARTICLES, AND COATING OR TREATMENT COMPOSITIONS

(30) Priorité: 23.07.2009 FR 0903667
(43) Date de publication de la demande: 30.05.2012
(73) Titulaire: Arkema France, 92700 Colombes (FR)
(72) Inventeur: BETREMIEUX, Isabelle, F-60580 Coye La Forêt (FR); BOONE, Alain, F-60140 Verderonne (FR); LOZE, Jean-Yves, F-60700 Pontpoint (FR)
(74) Mandataire: Killis, Andréas
(86) Numéro de dépôt international: PCT/EP2010/004315
(87) Numéro de publication internationale: WO 2011/009560

(56) Documents cités:
- WO-A2-2008/028062
- US-A1- 2002 013 405
- US-A1- 2005 107 527

## Description

La présente invention concerne une dispersion aqueuse de polymère spécifique, une dispersion de polymère comprenant ladite dispersion en mélange avec au moins une dispersion d'alkyde et leurs utilisations dans les compositions de revêtements ou de traitement.

EP 1 3043 43 B1 décrit une dispersion aqueuse de polymère contenant 10 à 70% en poids d'un premier polymère de Tg comprise entre -30°C et 100°C et 30 à 90% en poids d'un second polymère de Tg comprise entre -10°C et 18°C. Selon ce document, les dispersions décrites ont à la fois une bonne formation de film à basse température et une certaine dureté. La composition de monomères du premier polymère contient un monomère multi-éthylénique et celle du deuxième polymère contient un monomère (réticulant) choisi parmi ceux portant des groupes acétoacétoxy et des groupes cyanoacétoxy. Ce document concerne l'amélioration de la résistance à la salissure des peintures en rendant la particule un peu plus dure grâce à des inclusions de polymère de plus haute Tg dans le polymère mou. Cependant, l'amélioration de la résistance au blocking de la peinture reste assez faible en particulier dans les cas exemplifiés où la Tg de la partie dure est faible en restant inférieure à 13°C.

WO 2005/049184A2 décrit une dispersion aqueuse de polymère obtenue par un procédé multi-étapes. La première étape correspond à la synthèse d'un polymère ayant une Tg supérieure ou égale à 50°C, lequel polymère contient dans sa composition de monomères, un monomère à groupement d'acide faible, un monomère à groupement d'acide fort et un monomère à groupement cétone. La deuxième étape correspond à la synthèse d'un polymère ayant une Tg entre -30°C et 10°C lequel polymère contient dans sa composition monomère, un monomère à groupement d'acide faible, un monomère à groupement d'acide fort et un monomère à groupement cétone. Selon cette description, ces dispersions ont une MFT inférieure à 30°C, une bonne formation de film, une bonne résistance à haute température, un brillant élevé et une bonne résistance à l'eau et aux produits chimiques. Le fait que ces deux compositions polymères contiennent de forts taux de monomères hydrophiles tels qu'acides carboxyliques, phosphates et diacétonacrylamide et le fait qu'elles soient de plus polymérisées à pH élevé, est un inconvénient par rapport au contrôle de la structure des particules et des performances d'application. En effet, ce type de composition et ce type de procédé ne permettent pas une différenciation nette de l'hydrophilie de la partie dure par rapport à celle de la partie molle, conduisant ainsi à une structure aléatoire des particules polymères. Le risque de ce type de morphologie de particules est de conduire à une formation de film hétérogène et incontrôlée et donc à certains défauts tels qu'une mauvaise reproductibilité des propriétés d'élongation du film de peinture ou une rugosité assez élevée du film de vernis.

Le document WO2008/028062 décrit des dispersions aqueuses de particules polymères préparées par polymérisation en émulsion d'une première semence puis de deux populations de monomères. La Tg de la semence est de 30 à 110°C, celle du coeur des particules est de 30 à 70°C et celle de l'écorce est entre -10 et +10°C. La température minimale de formation de film est entre 0,5 et 4°C. Les monomères pouvant être utilisés sont cités, parmi eux on retrouve des dérivés acryliques diacétone ou acétoacétoxy. Les proportions des différentes phases dans les particules sont également précisées. Des agents réticulants peuvent également être utilisés tout comme différents types d'agents de surface. Les exemples 1 et 3 donnent une illustration du procédé et des particules de D1. Les dispersions peuvent être utilisés dans des compositions de revêtement pour différents substrats.

Ces documents ne décrivent pas la présence d'un monomère M1 dans la phase P1.

Le document US2005/107527 décrit des particules et un procédé très similaires.

Il y a donc besoin, par rapport à cet état de l'art, de nouvelles dispersions qui filmifient facilement sans agent de coalescence conduisant à l'obtention de films homogènes avec TMF obtenue bien maîtrisée et représentative de la structure spécifique de la particule de polymère en coeur dur/écorce molle, dispersions qui sont également stables, à la fois lors de la polymérisation et lors d'un stockage prolongé avant utilisation, pas d'évolution sur plus de 3 mois de stockage à 50°C, avec une bonne reproductibilité des caractéristiques. De plus, ces nouvelles dispersions sont autoréticulables et se comportent comme des compositions réticulables monocomposantes, type 1K, lors de la filmification et le départ de l'eau, en donnant des films transparents (homogènes) et sans défauts en termes de structure et de performances et permettant ainsi l'obtention de revêtements ayant un brillant élevé, une bonne résistance chimique, une bonne adhésion humide, une bonne flexibilité et également une excellente résistance au blocking (bonne même à température plus élevée), et une dureté élevée. Encore plus particulièrement, il y a besoin de dispersions aqueuses de polymère ayant une bonne compatibilité avec des polymères spécifiques et plus particulièrement avec les alkydes. Ces dispersions particulières en mélange avec les dispersions d'alkydes permettent ainsi l'amélioration supplémentaire du brillant, de la résistance à l'eau, de la dureté, de la vitesse de séchage avec obtention d'une résistance suffisante au blocking très rapidement après filmification.

Plus particulièrement, l'objectif de l'invention est l'obtention par un procédé spécifique d'une dispersion ayant des particules structurées en coeur dur / écorce molle avec une telle structure bien maîtrisée et reproductible en termes de structure et de performances, ce qui signifie que les phases dures et molles sont organisées selon une géométrie parfaitement reproductible de coeur et d'écorce. Cette structure, parce qu'elle est réellement obtenue, permet d'avoir des particules structurées qui forment des films parfaits même avec très peu d'agent de coalescence grâce à l'écorce molle qui recouvre totalement le coeur dur. L'excellente formation de film (reproductible et homogène) permet ainsi l'obtention de propriétés particulières de brillant, de résistance chimique, d'adhésion et de flexibilité. D'autre part, la structure maîtrisée du coeur dur apporte de manière reproductible les propriétés de dureté et de résistance au blocking. Cette structure parfaitement maîtrisée amène donc un compromis de propriétés à un niveau tout à fait exceptionnel et inégalé jusqu'à présent car le coeur et l'écorce de la particule sont maîtrisés par le contrôle des compositions spécifiques et d'un procédé spécifique utilisé. Etant donné que l'objectif était de contrôler la structure coeur dur / écorce molle, le procédé qui a été choisi est un procédé direct, avec obtention du coeur de la particule avant l'écorce, dans l'ordre d'addition des compositions correspondantes, permettant ainsi d'obtenir la structure grâce à la synthèse et la cinétique et non pas grâce à un équilibre thermodynamique (diffusion inverse d'une phase dans l'autre par affinité chimique). Dans ce dernier cas, souvent choisie pour des raisons de facilité, la structure finale repose sur un équilibre thermodynamique, la cinétique d'obtention de l'équilibre ainsi que la nature de l'équilibre sont difficilement maîtrisables et reproductibles. Dans un tel cas, ceci conduit à des latex dont les propriétés varient, en particulier, la formation de film et donc toutes les autres propriétés citées au préalable et qui sont directement liées à la formation de film. Par conséquent, une façon très simple de vérifier que la particule est bien maîtrisée en structure visée et stable, est de mesurer la température minimale de formation de film. Ainsi, dans le cas de la présente invention, du fait de l'excellente maîtrise de la structure, la TMF est prévisible, reproductible et stable. La dispersion telle que définie selon la présente invention permet donc de donner d'abord satisfaction à ces exigences générales et ensuite, certains modes plus particuliers de l'invention, satisfont en plus à des exigences techniques plus particulières plus spécifiquement visées par ces modes préférés de l'invention.

Ainsi, le 1^{er} premier objet de la présente invention concerne une dispersion aqueuse de polymère, structurée en ce qui concerne la structure des particules formées de polymère en structure coeur/écorce, avec ledit coeur étant dur et ladite écorce étant molle, avec une composition spécifique et des caractéristiques spécifiques pour chaque polymère correspondant au coeur P1 et à l'écorce P2. Un procédé spécifique de préparation de ladite dispersion aqueuse fait aussi partie des objets de la présente invention.

Un deuxième objet de la dispersion aqueuse plus spécifique de la présente invention est une dispersion aqueuse de polymère, laquelle comprend au moins une dispersion telle que définie en premier objet de la présente invention et en plus au moins une deuxième dispersion de polymère non structurée, ledit polymère étant sélectionné parmi plusieurs polymères réactifs ou non réactifs et plus particulièrement parmi les polyesters, plus particulièrement les polyesters insaturés et, encore plus préférentiellement les alkydes, les polyamides, les polyuréthanes.

Un autre objet de l'invention concerne une composition de revêtement ou de traitement comprenant au moins une dispersion de l'invention telle que définie selon le premier ou le deuxième objet défini ci-dessus. Il concerne en particulier des compositions de revêtements de protection et/ou de décoration parmi les peintures, vernis, lasures, encres ou adhésifs et des compositions de traitement de fibres.

Un autre objet de l'invention concerne l'utilisation de dispersions définies selon la présente invention dans les revêtements, plus particulièrement les revêtements de protection et/ou de décoration ou le traitement de fibres.

Les derniers objets de l'invention concernent respectivement un substrat revêtu à partir d'une composition de revêtement selon l'invention et une fibre traitée par une composition de traitement, les deux compositions comprenant respectivement au moins une dispersion telle que définie selon l'invention.

Donc, le premier objet de la présente invention est une dispersion aqueuse de polymère comprenant des particules structurées en coeur/écorce dur/mou, avec les caractéristiques spécifiques suivantes :
- la phase polymère du coeur P1 a une température de transition vitreuse Tg1 de 60 à 120°C, de préférence de 60 à 100°C, et
- la phase polymère de l'écorce P2 a une température de transition vitreuse Tg2 de -20 à 40°C, de préférence de -15 à 30°C, et que ladite dispersion présente une température minimum de filmification TMF de 0 à 50°C, de préférence de 0 à 40°C,
- la phase P1 représente 15 à 60%, de préférence de 20 à 60% et plus préférentiellement de 20 à 55% en poids par rapport au poids total de monomères de ladite dispersion (c'est à dire poids total de P1+P2), et
- la phase P1 comprend au moins un monomère M1 possédant au moins deux insaturations éthyléniques copolymérisables, plus particulièrement ayant une fonction d'agent réticulant, et au moins un monomère M2 éthyléniquement insaturé porteur d'au moins une fonction d'acide et/ou anhydride carboxyliques,
- la phase P2 représente 40 à 85%, de préférence de 40 à 80% et plus préférentiellement de 45 à 80% en poids du total des monomères de ladite dispersion, et
ladite phase P2 comprend :
- au moins un monomère M3 sélectionné parmi les monomères portant en plus de l'insaturation éthylénique polymérisable, au moins un groupement sélectionné parmi acétoacétoxy, tel que porté par l'acétoacétoxyéthyl (méth) acrylate (AAEM), diacétone tel que porté par la diacétone acrylamide (DAAM), méthylol tel que porté par-la N-méthylolacrylamide (NMA), ou alkoxysilane tel que porté par les (méth)acrylates d'alkoxysilanes, avec comme monomères M3 préférés la DAAM, le NMA, l'AAEM et les (méth)acrylates d'alkoxysilane. Dans le cas où le monomère M3 est porteur de groupement acétoacétoxy, l'addition en post polymérisation d'un composant hydrosoluble ou hydrodispersible porteur d'au moins deux fonctions de type amine ou hydrazide peut être utilisé et de façon similaire dans le cas où le monomère M3 est porteur de groupement diacétone, un composant hydrosoluble ou hydrodispersible en C4, C6 ou C8 peut être utilisé, lequel composant est porteur d'au moins deux fonctions hydrazides tel que l'acide adipique bishydrazide, afin de pouvoir faire réticuler la dispersion lors de la filmification par élimination de l'eau.

Ladite phase P2 comprend également au moins un agent de transfert sélectionné parmi les mercaptans hydrophiles ou portant un groupement ionique et au moins un deuxième agent de transfert sélectionné parmi les mercaptans hydrophobes avec un rapport en poids d'agent hydrophile sur agent hydrophobe supérieur à 1 et de préférence supérieur à 1,5.

En fait, lesdits groupements acétoxy, diacétone, methylol, alkoxysilane desdits monomères M3 procurent à ladite dispersion de l'invention un caractère de dispersion autoréticulable se comportant comme un système 1K (autoréticulable monocomposant), en post-polymérisation, lors de l'étape de filmification-séchage, l'autoréticulation étant favorisée par le départ de l'eau et de l'agent neutralisant lors dudit séchage en cours de filmification.

Plus particulièrement, ladite phase P1 de polymère est constituée d'une phase polymère de semence P0 et d'une phase polymère P'1 complémentaire, signifiant complémentaire à P0 pour donner P1, avec la composition de ladite phase P0 étant exempte desdits monomères M1 et M2 et sur le reste (hormis M1 et M2) les compositions de P0 et P'1 pouvant être identiques ou différentes.

De préférence, le taux global en poids desdits premier et deuxième agent de transfert représente de 0,02 à 2% et de préférence de 0,05 à 1,5% par rapport au poids total de monomères de ladite dispersion (poids total des phases P1+P2). Par rapport à P2, ce % en poids varie de 0,02 à 5% et de préférence de 0,05 à 4%.

Plus préférentiellement, quand le taux en poids de P1 dépasse 35%, de préférence 30%, dans ce cas ledit Tg1 reste inférieur à 75°C.

Lesdits Tg1 et Tg2, tels que définis dans la présente invention, sont déterminés par calcul selon la relation de Fox et dans ce calcul est prise en compte la présence potentielle de plastifiant ou de tout composé, y compris de monomères résiduels pouvant jouer un tel rôle et affecter ainsi la Tg du polymère.

La différence entre lesdits Tg1 et Tg2 ainsi calculés varie de préférence de 20 à 140°C et de préférence de 30 à 115°C.

Le monomère M1 de la phase P1 peut être choisi parmi les monomères esters allyliques monofonctionnels ou multifonctionnels dérivés d'acides carboxyliques ou dicarboxyliques α,β-insaturés (tels que (méth)acrylate d'allyle, maléate de monoallyl ou de diallyle, tetrahydrophtalate de monoallyle ou de diallyle) ou esters allyliques multifonctionnels d'acides di- ou polycarboxyliques saturés (tels que phtalate de diallyle, trimésitate de triallyle), ou autres monomères polyallyliques (tel que triallyl cyanurate), les esters (méth)acryliques multifonctionnels de fonctionnalité d'au moins 2 tels que les di(méth)acrylates de polyalkylène glycol (tels que di(méth)acrylate d'éthylène glycol, di(méth)acrylate de tripropylène glycol, di(méth)acrylate de diéthylène glycol), les di(méth)acrylates d'alkylène diols ou polyols, de préférence avec alkylène allant de C2 à C8 (tels que di(méth)acrylate de 1,6-hexanediol, di(méth)acrylate de 1,3-butylène glycol, di(méth)acrylate de 1,4-butanediol, di(méth)acrylate de néopentyl glycol, tri(méth)acrylate de trimethylol propane), et les polyvinylbenzènes (tels que le divinylbenzènes, divinyltoluènes, divinylnaphtalènes, trivinylbenzène). Les préférés sont les (méth)acrylate d'allyle, butanediol di(méth)acrylate, hexanediol di(méth)acrylate.

Le monomère M2 de la phase P1 peut être choisi parmi les acides : (méth)acrylique fumarique, maléique, itaconique, vinylbenzoïque, crotonique ou isocrotonique et/ou leurs anhydrides et de préférence l'acide méthacrylique (AMA) et/ou acide acrylique (AA). L'AA et l'AMA sont les plus préférés.

Plus particulièrement, lesdits monomères M1 et M2 de la phase P1 représentent un taux global en poids allant de 0,5 à 10% et de préférence de 1 à 8% du poids total de la phase P1, avec ledit monomère M2 représentant de 0,1 à 5% et de préférence de 0,2 à 4% en poids de ladite phase P1.

Dans la dispersion selon l'invention, la phase P2 également, comme P1, comprend au moins un monomère M2 tel que défini ci-dessus, avec des taux respectifs de M2 dans les phases P1 et P2 tels que le rapport du taux de M2 dans P1 sur celui dans P2 varie de 1/1 à 1/10 et de préférence de 1/2 à 1/8.

Ledit monomère M3 peut être présent dans ladite phase P2 à un taux en poids allant de 1 à 25%, de préférence de 1 à 15% exprimé par rapport au poids total de P1+P2, plus particulièrement avec un % exprimé vs P2 allant de 1 à 60% de préférence de 1,5 à 40%.

Selon un mode plus préféré de la présente invention, ledit monomère M3 porte un groupement diacétone et ladite dispersion comprend en plus sous forme dispersée de l'acide adipique bishydrazide qui est additionné à la dispersion à la fin de la polymérisation de P1 et P2, avant ou après l'ajout de l'agent neutralisant.

Selon un mode plus préféré de la présente invention, ledit monomère M3 porte un groupement acétoacétoxy, lequel est quantitativement converti sous forme bloquée de groupement ène-amine, et ceci à la fin de la polymérisation de P1 et P2.

Selon un mode plus préféré de la présente invention, ledit monomère M3 porte un groupement acétoacétoxy, lequel est quantitativement converti sous forme bloquée de groupement ène-amine, et ceci in situ lors de la polymérisation correspondant à (l'obtention de) la phase P2, ladite phase P2 étant dans un tel cas, exempte de tout monomère M2 tel que défini ci-dessus.

Encore selon un mode plus particulier, ladite phase P1 peut comprendre également (en plus de P2), au moins un monomère M3 portant un groupement acétoacétoxy. Encore plus particulièrement dans ce cas, ledit groupement acétoacétoxy de la phase P1 peut être converti quantitativement sous forme bloquée ène-amine, et ceci lors de la polymérisation correspondant à (l'obtention de) la phase P2. En fait, la conversion en ène-amine dans la phase P1 est obtenue, dans ce cas après la polymérisation correspondant à l'obtention de la phase P1.

Dans la dispersion de l'invention, ladite phase P2 peut comprendre en plus des monomères M2 et/ou M3, au moins un autre (c'est à dire différent) monomère M4, porteur, en plus de l'insaturation éthylénique polymérisable, d'au moins un groupement fonctionnel sélectionné parmi : hydroxy tel que porté par les hydroxyalkyl (méth)acrylates avec alkyl de C2 à C4 (comme le HEMA, HPMA), amine tel que porté par les aminoalkyl (méth)acrylates ou aminoalkyl (méth)acrylamides, par exemple le MADAME (méthacrylate de diméthyl amino éthyle) ou le MATBAE (méthacrylate de t-butyl aminoéthyle), oxirane tel que porté par le (méth)acrylate de glycidyle (comme le MAGLY), phosphates, phosphonates ou phosphinates tels que portés par les phosphates ou phosphonates ou phosphinates d'hydroxyl alkyl (méth)acrylates et d'hydroxy alkyl éthoxylé et/ou propoxylé (méth)acrylate, amide tel que le (méth)acrylamide, sulfate et sulfonate tels que portés par les (méth)acrylate d'hydroxy alkylsulfonates (comme le méthacrylate d'hydroxy éthyl sulfonate) ou les (méth)acrylamide d'hydroxyalkyl sulfonates (comme l'acrylamide propane sulfonique acide) et leurs sels ou imide tel que le maléimide ou aziridine tel que porté par le méthacrylate de 1-(2-hydroxyéthyl), aziridine ou oxazoline ou imidazole tel que porté par le méthacrylate de 2-éthyl2-oxo-imidazolidin-1 yl, sous condition que le choix des monomères M4 soit réalisé de manière à éviter une réaction ou une interaction ionique pendant la synthèse qui rendrait celle-ci impossible entre les différents groupements de monomères M4 ou entre les groupements des monomères M4 et les groupements des autres monomères.

Ladite phase P2 peut comprendre en plus de ces monomères (M2 et/ou M3 et/ou M4), au moins un autre (c'est à dire différent) monomère M5, sélectionné parmi au moins une huile (esters de glycérol) d'acides gras insaturé en C10 à C36 (y compris dimères) et/ou au moins un ester méthylique correspondant à ces acides gras, de préférence au moins une huile de lin et/ou au moins un ester méthylique d'acide linoléique et/ou linolénique.

Selon un mode préféré de l'invention, ladite phase P2 de la dispersion de la présente invention comprend à la fois le monomère M3 et le monomère M5 tels que définis ci-dessus.

Concernant la structure en monomères (ou composition en monomères) des phases P1 et P2, elles peuvent être soit à base de monomères purement acryliques et donc de structure pure acrylique (« acrylique » signifiant ici à la fois acrylique et/ou méthacrylique), ou bien à base d'une structure mixte pouvant comprendre dans une de deux phases (P1 ou P2) ou dans les deux phases des monomères vinyl aromatiques, plus particulièrement le styrène et/ou ses dérivés comme les vinyl toluènes ou bien le vinyl benzène ou et de préférence le styrène et/ou vinyl toluènes. Plus particulièrement, P1 et/ou P2 peut comprendre de tels monomères vinyl aromatiques. Selon une autre variante, la phase P1 seule est purement acrylique et selon une autre variante la phase P2 seule est purement acrylique et selon une troisième variante les deux phases P1 et P2 sont purement acryliques et donc en conséquence ladite dispersion l'est (purement acrylique) aussi.

Selon une autre variante de la dispersion de la présente invention, la phase P2 comprend des monomères vinyl aromatiques et la phase P1 est purement acrylique et selon une autre variante la phase P2 est purement acrylique et la phase P1 comprend des monomères vinyl aromatiques tels que définis ci-dessus. Les variantes les plus préférées de la dispersion de l'invention correspondent à : une phase P1 comprenant des monomères vinyl aromatiques avec une phase P2 étant purement acrylique, la dispersion étant dans ce cas de type styrène-acrylique et une dispersion qui (P1 et P2) est purement acrylique.

Ladite phase P1 peut comprendre et, de préférence comprend, une phase de semence P0, exempte de monomères M1 et M2 tels que définis ci-dessus, avec ladite phase P0 représentant en poids de 2 à 25% et de préférence de 5 à 20% du poids de ladite phase P1. Plus particulièrement, la phase P1 est obtenue avant ladite phase P2, laquelle phase P2 est obtenue par polymérisation des monomères correspondants de cette phase polymère, à une température inférieure ou égale et de préférence inférieure à Tg1 telle que définie ci-dessus. Encore plus préférentiellement, on se situe à une température (de polymérisation de P2) d'au moins 5 degrés inférieure à Tg1.

La dispersion de l'invention, telle que décrite précédemment, peut être obtenue par polymérisation en émulsion, comprenant (c'est à dire en présence de) une semence P0, et avec les caractéristiques supplémentaires particulières suivantes :
- ladite semence P0 comprend de 0,1 à 1,5% et de préférence de 0,3 à 1,2% en poids exprimé par rapport au poids total P1+P2, d'au moins un tensioactif anionique
- la phase P1 comprend 0,1 à 3%, de préférence 0,1 à 1,5% en poids du poids total P1+P2, d'au moins un tensioactif anionique pouvant être le même ou différent que celui de la semence P0, avec en option la possibilité d'un deuxième tensioactif anionique différent du premier avec le taux en poids de ces deux tensioactifs anioniques de P1 restant de 0,1 à 3%, de préférence 0,1 à 1,5% du poids total de P1+P2
- la phase P2 comprend 0,1 à 3%, de préférence de 0,2 à 2,5% en poids par rapport au poids total P1+P2, d'au moins deux tensioactifs :
   a) le premier étant non ionique et choisi parmi les alcools gras alcoxylés, de préférence alcools gras en C12 à C16 alcoxylés, avec les unités alcoxy préférées étant des unités éthoxy et/ou propoxy et plus préférentiellement des unités éthoxy, le nombre desdites unités alcoxy étant de préférence de 3 à 50 et plus préférentiellement de 5 à 40 unités éthoxy
   b) le deuxième étant anionique pouvant être identique ou différent de celui défini pour P0.

Le tensioactif anionique non spécifié peut être choisi parmi les sulfates ou sulfonates ou phosphates ou phosphonates d'alcools gras en C9 à C 14, éventuellement alcoxylés, avec comme unités alcoxy l'éthoxy et/ou le propoxy, l'éthoxy étant l'unité alcoxy plus préférée et avec un nombre préféré d'unités alcoxy allant de 2 à 30 de préférence de 2 à 10, ledit tensioactif anionique étant sélectionné de préférence parmi le dodécylbenzènesulfonate, le lauryl sulfate de sodium, le lauryl sulfate de sodium éthoxylé, l'isotridécyl sulfate de sodium éthoxylé, le lauryl phosphate d'ammonium éthoxylé ou le sulfosuccinate.

Comme tensioactif non ionique, on peut choisir parmi les alcools gras alcoxylés, de préférence alcools gras en C12 à C16 alcoxylés, avec les unités alcoxy préférées étant des unités éthoxy et/ou propoxy et plus préférentiellement des unités éthoxy, le nombre desdites unités alcoxy étant de préférence de 3 à 50 et plus préférentiellement de 5 à 40 unités éthoxy.

Plus précisément, le procédé de préparation d'une dispersion, telle que définie selon l'invention, comprend au moins les 3 étapes suivantes :
i) une étape d'ensemencement comprenant une prépolymérisation (partielle ou complète) d'une composition de semence P0 exempte de monomères M1 et M2 et avec des particules de semence ayant une taille inférieure ou égale à 30 nm, et représentant un taux en poids allant de 2 à 25% et de préférence de 5 à 20% par rapport au poids de ladite phase P1,
ii) une étape de polymérisation d'une composition de monomères P'1 comprenant lesdits monomères M1 et M2 et donnant la phase polymère P'1, constituant ainsi avec le polymère de semence P0, obtenu à l'étape i), ladite phase de polymère P1 du coeur de la particule, ladite composition de monomères P'1, hormis la présence des monomères M1 et M2, pouvant être identique ou différente de celle de la composition de semence P0,
iii) une étape de polymérisation d'une composition de monomères P2, donnant lieu à ladite phase P2.

Les amorceurs de l'étape d'ensemencement (i) représentent un taux en poids de 0,1 à 0,4% du poids total P1+P2.

En ce qui concerne les plages de températures utilisées dans ce procédé :
- l'étape i) comme l'étape ii) sont réalisées à une température de 75 à 90°C
- l'étape de polymérisation iii) est réalisée à une température inférieure ou égale à Tg1 et de préférence inférieure à Tg1, et plus préférentiellement inférieure d'au moins 5 degrés par rapport à Tg1, ceci pour un procédé à pression atmosphérique.

Selon un mode préféré du procédé, l'étape ii) de polymérisation en émulsion de la composition de monomères P'1 (et de préférence P1) est poursuivie jusqu'à un taux de conversion d'au moins 95%, avant addition de la composition de monomères P2.

Le deuxième objet de dispersion aqueuse plus spécifique selon l'invention est une dispersion aqueuse de polymère, qui comprend, en plus d' (au moins) une première dispersion aqueuse de polymère telle que définie ci-haut, au moins une autre, deuxième dispersion aqueuse de polymère (ou de résines dispersibles dans l'eau), de préférence à base de résines polyesters saturés et/ou insaturés et plus particulièrement de résines alkydes, encore plus particulièrement des résines alkydes modifiées, telles que modifiées acryliques, ou par le styrène ou par uréthane ou par amide ou par traitement oxydant, ou à base de copolymères acryliques, ou à base d'oligomères acryliques acrylés, ou à base de polyuréthanes, ou à base de résines d'hydrocarbures, telles que résines d'hydrocarbures aliphatiques, en C5 ou aromatiques en C9 ou mixtes en C5/C9. Plus préférentiellement, ladite dispersion selon l'invention comprend, en plus d' (au moins) une dispersion aqueuse telle que définie selon le premier objet de l'invention défini ci-haut, au moins une autre (deuxième) dispersion de polymère qui est à base d'au moins une résine alkyde telle que définie ci-dessus (modifiée ou non modifiée et dans le cas où elle est modifiée : modifiée acrylique, styrène, uréthane ou amide ou par traitement oxydant). Selon ce dernier cas préféré, ladite dispersion aqueuse comprend une dispersion d'alkyde (ou de résine alkyde) avec un taux en poids de ladite résine alkyde représentant de 15 à 45% du poids total de l'alkyde et de l'autre polymère de la dispersion telle que définie selon le premier objet de l'invention ci-dessus (ledit autre polymère de la dispersion correspondant à P1+P2). Par rapport au poids total des monomères P1+P2, ce taux varie dans une plage allant de 15 à 85%.

Selon un mode plus préféré, ladite dispersion aqueuse, telle que définie ci-haut comme deuxième objet de dispersion spécifique de l'invention, comprend comme dispersion de polymère (défini comme premier objet de l'invention), au moins une dispersion aqueuse comprenant au moins un monomère M5 choisi parmi au moins une huile (ester de glycérol) d'au moins un acide gras insaturé en C10 à C36 et/ou au moins un ester méthylique correspondant de ces acides gras et plus préférentiellement au moins une huile de lin et/ou un ester méthylique d'acide linoléique et/ou linolénique. La modification par un tel monomère M5 de la dispersion de polymère définie comme premier objet de l'invention, contribue à améliorer sensiblement la résistance chimique, la résistance au blocking, la compatibilité et adhésion du film de ladite dispersion avec un revêtement d'alkyde, appliqué soit après soit avant ledit film sur le même substrat à protéger et/ou à décorer.

Ladite dispersion, telle que définie comme deuxième objet de dispersion plus spécifique de l'invention, a l'avantage de pouvoir être préparée par simple mélange d'au moins une autre dispersion aqueuse de polymère ou de résine comme déjà définie ci-haut et de préférence par simple mélange d'au moins une dispersion aqueuse d'alkyde, avec au moins une dispersion aqueuse telle que définie comme premier objet de la présente invention.

Un autre objet de l'invention concerne une composition de revêtement ou une composition de traitement qui comprend au moins une dispersion aqueuse telle que définie déjà ci-haut selon le deuxième objet de l'invention.

Selon une première possibilité, ladite composition de revêtement est une composition de revêtement de protection et/ou de décoration et de préférence elle est sélectionnée parmi les peintures, vernis, lasures, encres ou adhésifs.

De préférence, la composition de traitement est une composition de traitement de fibres, qui peuvent être naturelles ou de synthèse, organiques ou minérales et peuvent être sous forme de fibres isolées ou sous forme de mat ou de tissus tissés ou non tissés. Comme exemples de fibres, on peut citer : fibres de verre, de carbone, de textile, d'aramide comme le Kevlar^{R}.

Un autre objet de l'invention concerne l'utilisation d'une dispersion aqueuse telle que définie selon le premier objet ou telle que définie selon le deuxième objet de la présente invention, objets définis précédemment et ci-dessus, dans les revêtements de protection et/ou de décoration ou dans le traitement de fibres.

L'utilisation desdites dispersions selon l'invention dans les revêtements concerne plus particulièrement la protection et/ou la décoration de substrats, de préférence sélectionnés parmi le bois, le carton, le métal, le plastique, le plâtre, le béton, le fibrociment, le verre.

Ladite utilisation dans le traitement des fibres de verre et des fibres textiles peut être réalisée avec lesdites fibres sous forme de fibres tissées ou non tissées.

Un autre objet de l'invention concerne un revêtement, obtenu par l'utilisation d'au moins une dispersion telle que définie selon le premier ou le deuxième objet de dispersion de la présente invention ou par l'utilisation d'une composition de revêtement telle que définie ci-dessus selon la présente invention.

Finalement font également partie de l'invention, d'abord un substrat revêtu par au moins une couche d'au moins une composition de revêtement telle que définie ci-haut selon l'invention et ensuite une fibre traitée, par au moins une composition de traitement telle que définie plus haut selon la présente invention.

### Partie expérimentale

### A) Description de matières premières, de préparation des dispersions et formulations d'application et de tests utilisés

### 1) Matières premières de préparation des dispersions (voir tableau 1 ci-dessous)

**Tableau 1 : Matières premières utilisées dans la synthèse des dispersions**

| **Constituants** | **Fonctions** | **Natures chimiques** | **Fournisseurs** |
|---|---|---|---|
| Aerosol^{R} A 102 | Tensio-actif | Sulfosuccinate d'alcool gras éthoxylé, sel de sodium (C10-C12) solution à 30% dans l'eau | Cytec |
| Disponil^{R} FES 32 | Tensio-actif | Sulfate d'alcool gras polyglycol éther, sel de sodium solution à 31% dans l'eau | Cognis |
| Tergitol^{R} 15S9 | Tensio-actif | Alcool gras éthoxylé secondaire avec 9 OE, 100% | Dow |
| HDDA | Réticulant | Hexanediol diacrylate (HDDA) | Sartomer |
| ABu | Monomère | Acrylate de Butyl | Arkema |
| MAM | Monomère | Méthacrylate de Méthyle | Arkema |
| AA | Monomère | Acide Acrylique | Arkema |
| AAEM | Réticulant | AcétoAcétoxyEthylMéthacrylate | Hunstman |
| Radia^{R} 7061 | - | Ester méthylique de l'huile de lin | Oleon |
| nDDM | Mercaptan | N-dodécylmercaptan | Acros |
| MPP | Mercaptan | Acide mercaptopropionique | Acros |
| Na2S2O8 | Peroxyde | Persulfate de sodium | Aldrich |
| Na2S2O5 | Réducteur | Métabisulfite de sodium | Prolabo |
| TBHP | Peroxyde | Ter-butyle hydroperoxyde à 70% | Aldrich |
| SFS | Réducteur | Formaldehyde sulfoxylate de sodium | Bruggeman |
| NaOH | Neutralisation | Hydroxyde de sodium | Prolabo |
| Acticide^{R} MBS | Biocide | Solution aqueuse de méthylisothiazoline (MIT) et de benzisothiazolinone (BIT) (2,5% MIT /2,5% BIT) | Thor |

### 2) Mode opératoire de préparation des dispersions étudiées ici

Le mode opératoire décrit ci-dessous décrit la synthèse de la dispersion selon l'exemple 1. Il reste le même pour les autres dispersions des autres exemples décrits dans ce brevet aux modifications près indiquées de compositions ou d'autres paramètres. En effet :

Les quantités de monomères M1 et M2 dans P1, ainsi que celles de M2 et M3 dans P2 restent inchangées par rapport à l'ensemble des monomères P1+P2 (sur 100 p de monomères P1+P2), dans tous les exemples.

Ensuite, les Tg du coeur (Tg1) et de l'écorce (Tg2) sont ajustées en variant le rapport pondéral de méthacrylate de méthyle et d'acrylate de butyle présents dans chacune des phases P1 et P2, selon la loi de Fox et de manière à obtenir, avec les autres monomères présents, le pourcentage en poids total de chacune des phases P1 et P2, leur somme faisant 100.

### Matériel utilisé :

Un réacteur de 3 1 (contenance interne) en verre, équipé d'une double enveloppe, muni d'une agitation efficace (vortex), d'un réfrigérant à triple flux, d'un contrôle et d'une régulation de la température matière. Le réacteur comporte le nombre de raccords d'introductions nécessaires à l'introduction séparée des différents composants, ainsi qu'une introduction dédiée à l'inertage à l'azote de l'ensemble. L'étanchéité est vérifiée avant chaque synthèse. L'installation est équipée d'un système permettant de contrôler les débits d'introduction des composants.

### Préparation de la charge initiale en pied de cuve :

12 g de Disponil FES 32 sont solubilisés dans 1016 g d'eau déminéralisée en pied de cuve. La température du pied de cuve est portée à 85°C.

### Préparation de la semence P0 :

Mélanger 19,5 g de MAM + 19,5 g d'ABu.

### Préparation de la préémulsion P'1 :

12 g d'Aerosol A102, 24 g de Disponil FES 32 sont dispersés dans 95 g d'eau déminéralisée sous bonne agitation.

Sont ajoutés tour à tour et sous bonne agitation :
- 264,2 g de MAM
- 15 g d'ABU
- 12 g d'HDDA
- 6 g d'AA

La préémulsion ainsi formée est blanche et stable et elle sera maintenue sous légère agitation.

Elle sera utilisée pour la synthèse du coeur de la particule, P1, composé de P0 et P'1 (P1= P0+P'1).

### Préparation de la préémulsion P2 :

12 g d'Aerosol A102, 6 g de Tergitol 15S9 sont dispersés dans 171,7 g d'eau sous bonne agitation.

Sont ajoutés tour à tour et sous agitation :
- 318,3 g de MAM
- 408,3 g d'ABu

On obtient une préémulsion blanche et stable.

10% de cette préémulsion, soit 91,6 g seront prélevés et utilisés pour réaliser un ensemencement avant la coulée de P2.

Puis sont ajoutés dans la préémulsion, toujours sous bonne agitation :
- 120 g d'AAEM
- 18 g d'AA
- 1,2 g de MPP

Cette préémulsion, P2, blanche et stable, servira à la synthèse de l'écorce de la particule.

### Préparation des solutions de catalyseurs :

4,2 g de persulfate de sodium sont solubilisés dans 80 g d'eau.
1,2 g de métabisulfite de sodium sont solubilisés dans 10,8 g d'eau.
1 g de TBHP (70%) est solubilisé dans 4,5 g d'eau.
0,5 g de SFS dans 11,5 g d'eau.

### Procédé de polymérisation :

### i) Ensemencement P0

Le pied de cuve avec la charge initiale, étant stable en température à 85°C, sont alors introduits pour l'ensemencement P0, le mélange de 19,5 g de MAM et 19,5 g d'ABU. Une fois la température stabilisée, 70% de la solution de persulfate de sodium sont ajoutés. Le maximum d'exothermie marque la fin de cette étape, la taille de particule est d'environ 30 nm et la conversion est supérieure à 70%.

### ii) Synthèse du coeur P1

L'introduction de la préémulsion P'1 dure 90 minutes, à une température de polymérisation de 85°C.

### iii) Etape de cuisson thermique et refroidissement

La température est maintenue pendant 60 minutes à 85°C. A la fin de la cuisson thermique, le milieu réactionnel est refroidi à 65°C. La conversion est alors proche de 100%.

### iv) Synthèse de l'écorce P2

A 65°C, l'ensemencement constitué de 91,6 g de la fraction de P2 est introduit dans le réacteur. On mélange pendant au moins 5 mn.

Début des introductions séparées :
- de 100% de la seconde préémulsion P2 (après ensemencement)
- 30% de la solution d'initiateur
- 100% de la solution d'activateur

Pendant les coulées, qui durent 150 minutes, la température du milieu est maintenue à 65°C. Cette étape est suivie d'une post-cuisson d'une durée de 30 minutes à 65°C.

### v) Traitement redox

Les solutions de TBHP et SFS sont ajoutées à 65°C en 30 minutes. Ce traitement redox est suivi d'une cuisson à 65°C pendant 30 minutes avant refroidissement à température ambiante.

### vi) Additions finales

A 30-35°C, le latex est neutralisé par addition de soude à pH 8 et post-additionné d'un biocide. Il est ensuite filtré sur toile 100 µm. L'extrait sec est de 41,5%.

La taille de particule finale est d'environ 90 nm, la viscosité est inférieure à 100 mPa.s, la TMF mesurée est de 5°C.

La liste des diverses dispersions aqueuses préparées sur la base de ce mode opératoire est présentée au tableau 2 ci-dessous, avec indication des paramètres qui varient d'un essai à l'autre.

### 3) Dispersions préparées et caractéristiques variables (voir tableau 2 ci-dessous)

**Tableau 2 : Dispersions préparées**

| N° | %P0 | %P'1 | %P1/%P2 | Tg P0 (°C) | Tg P'1 (°C) | Tg P1 Tg1 (°C) | Tg P2 Tg2 (°C) | Tg moyenne (°C) | Remarques |
|---|---|---|---|---|---|---|---|---|---|
| 1 | 3,25 | 24,75 | 28/72 | 4 | 91 | 79 | 0 | 18 | comparatif |
| 2 | 3,25 | 36,75 | 40/60 | 4 | 70 | 64 | -15 | 12 | comparatif |
| 3 | 3,25 | 24,75 | 28/72 | 4 | 92 | 79 | 0 | 18 | comparatif P1 sans M1 |
| 4 | 3,25 | 24,75 | 28/72 | 4 | 91 | 79 | 0 | 18 | comparatif P1 sans M2 |
| 5 | 3,25 | 24,75 | 28/72 | 4 | 92 | 79 | 0 | 18 | comparatif P1 sans M1 ni M2 |
| 6 | 3,5 | 36,5 | 40/60 | 70 | 71 | 71 | -10 | 17 | comparatif |
| 7 | 3,5 | 36,5 | 40/60 | 70 | 71 | 71 | -10 | 17 | comparatif (effet M5) : ajout de Radia^{R} 7061 dans P2 |

Dans l'exemple 7, la quantité de Radia 7061 introduite pendant la synthèse de l'écorce (P2) est de 2% par rapport au poids total P1+P2.

Les Tg des phases sont calculées selon la loi de Fox, à partir des Tg des homopolymères indiquées comme ci-dessous :

| Monomère | Abréviation | Tg (°C) |
|---|---|---|
| Acide acrylique | AA | 106 |
| Acide méthacrylique | AMA | 228 |
| Acrylate de butyle | ABU | -54 |
| Méthacrylate d'acétoacétoxyéthyle | AAEM | 18 |
| Méthacrylate de méthyle | MAM | 105 |

### 4) Caractérisation physico-chimique des dispersions

### a) Extrait sec (ES)

L'extrait sec des dispersions aqueuses est mesuré selon la norme ISO 3251.

### b) pH

Le pH des dispersions aqueuses est mesurée selon la norme ISO 976.

### c) Viscosité

La viscosité des dispersions aqueuses est mesurée selon la norme ISO 2555.

### d) Taille des particules

La taille des particules est mesurée par Spectroscopie de Corrélation de Photons (PCS), à l'aide d'un appareillage N4+ de Beckman Coulter. L'échantillon est dilué (3 à 5 gouttes d'émulsion dans 50 ml d'eau) dans une cuve en polystyrène à l'aide d'eau désionisée sur un filtre en acétate de cellulose de 0,22 µm. La taille des particules est mesurée à une température de 25°C, sous un angle de mesure de 90° et à une longueur d'onde du laser de 633 nm.

### e) Température minimale de formation de film (TMF) mesurée et attendue en fonction de la structuration ou non de la particule

La TMF des dispersions aqueuses est mesurée selon la norme ISO 2115.

Il faut noter que la TMF attendue pour une particule structurée parfaitement en coeur P1 / écorce P2 dur/mou, est proche (plus ou moins en fonction aussi du % de P2) de la Tg2 (voir tableau 9). Quand la TMF est proche de la Tg moyenne, ceci est signe que la particule est non structurée (mélange des phases P1 et P2). Plus particulièrement, on peut considérer en première approximation que pour une particule parfaitement structurée à un % P2 dépassant 60%, ladite TMF (attendue) tend à être confondue à la Tg2 à la précision près de mesure de la TMF (+- 2°C) et de la Tg2 (selon Fox). Pour un % P2 jusqu'à 60%, la TMF attendue varie selon les indications présentées dans le tableau 9.

### f) Performances mécaniques

### Résistance à la traction :

Les essais de résistance à la traction ont été réalisés sur une machine à traction MTS 1MH, à une température de 23°C et à 50% d'humidité relative (HR), et avec une cellule à 50 N.

La vitesse de l'essai est de 5 mm/min.

### 5) Préparation des formulations de revêtements (peintures)

### 5.1) Matières premières (voir ci-dessous tableau 3)

**Tableau 3 : Matières premières utilisées dans les formulations de peinture**

| **Constituant** | **Fonction** | **Nature chimique** | **Fournisseur** |
|---|---|---|---|
| Acticide^{R} MBS | Biocide | Solution aqueuse de méthylisothiazoline (MIT) et de benzisothiazolinone (BIT) | Thor |
| Propylèneglycol | Solvant | - | Acros |
| AMP 90 | Agent neutralisant | 2-amino-2-methyl-1-propanol | Angus Chemie |
| Disperbyk^{R} 190 | Dispersant | Copolymère bloqué à haute masse moléculaire | Byk Chemie |
| Tiona 595 | Pigment | Dioxvde de titane | Millenium |
| Aquaflow^{R} NHS 300 | Epaississant | Polyéther polyacétal modifié hydrophobiquement | Hercules Aqualon |
| Byk^{R}022 | Antimousse | polysiloxane | Byk-Chemie |
| Ammoniaque | Agent neutralisant | - | VWR |
| Additol^{R} VXW 6206 | Siccatif | Combinaison de carboxylates de Cobalt, Lithium et Zirconium | Cytec Surface Specialties |
| Acrysol^{R} RM-8 W | Epaississant | Epaississant HEUR (URéthane d'oxyde d'Ethylène modifié Hvdrophobiquement) | Rhom & Haas |
| TEGO^{R} Glide 450 | Additif de glissance et tension | Copolymère siloxane polyéther | Tego-Chemie |
| Synaqua^{R} 4804 | Emulsion alkyde | | Cray Valley |

L'évaluation des performances des dispersions aqueuses décrites dans le tableau 2 est effectuée sur des films appliqués à partir de formulations de peintures brillantes telles que décrites aux tableaux 4 et 5.

### 5.2) Mode opératoire de préparation des formulations des peintures

### Fabrication de la base de broyage :

On introduit dans un récipient successivement et sous agitation, l'eau et les différents constituants, à grande vitesse dans un disperseur Disperlux modèle 2075, jusqu'à une finesse < 10 µm.

### Fabrication de la peinture :

On introduit dans un récipient successivement et sous agitation, le ou les liants (ou l'émulsion alkyde siccative et/ou la dispersion aqueuse), la base de broyage précédemment préparée, l'eau et les différents constituants.

### 5.3) Composition des formulations : peintures acryliques (tableau 4) ou alkyde-acryliques (tableau 5)

**Tableau 4 : composition des formulations de peintures acryliques**

| **Constituant** | **Fonction** | **Parties en poids (%)** |
|---|---|---|
| Dispersion aqueuse | - | 60,63 |
| Ajouter la base de broyage | | |
| | | |

| *Base de broyage :* | | |
|---|---|---|
| *Eau* | | *4,00* |
| *Acticide*^{R} *MBS* | *Biocide* | *0,20* |
| *Propylène glycol* | *Solvant* | *2*,*00* |
| *AMP 90* | *Agent neutralisant* | *0,10* |
| *Disperbyk*^{R} *190* | *Dispersant* | *0,72* |
| *Tiona 595* | *Pigment* | *24,00* |
| *Byk*^{R} *022* | *Antimousse* | *0,15* |
| Ajouter sous agitation | | |
| | | |
| Eau | | 4,72 |
| Aquaflow^{R} NHS 300 | Epaississant | 2,56 |
| Acrysol^{R} RM-8 W | Epaississant | 0,77 |
| Ammoniaque | Agent neutralisant | ∼0.20 jusqu'à pH final > 8,5 |
| **Total peinture** | | **100** |

### Caractéristiques des formulations (calculées grâce au logiciel de formulation « PV6FORMULA Version 2-3 » de Pierre Vergne - Inter Deposit Digital Number : IDDN.FR.001.280022.001.S.P.2001.000.30265) :

Concentration volumique pigmentaire : CPV = 19%
Extrait sec en poids = 52,3%
Extrait sec en volume = 40%
Densité : d = 1,26

**Tableau 5 : composition des formulations de peintures alkyde-acryliques**

| **Constituant** | **Fonction** | **Parties en poids (%)** |
|---|---|---|
| Synaqua^{R} 4804 | Emulsion alkyde | 34,30 |
| Additol^{R} VXW 6206 | Siccatif | 0,26 |
| Dispersion aqueuse | - | 25,51 |
| Mélanger 5 min puis Ajouter la base de broyage | | |
| | | |

| *Base de broyage :* | | |
|---|---|---|
| *Eau* | | *5,32* |
| *Acticide^{R} MBS* | *Biocide* | *0,19* |
| *Disperbyk*^{R} *190* | *Dispersant* | *0,60* |
| *Tiona* 595 | *Pigment* | *24,00* |
| *Byk*^{R} *022* | *Antimousse* | *0,19* |
| Ajouter sous agitation | | |
| | | |
| Eau | | 4,11 |
| TEGO^{R} Glide 450 | Additif de glissance et tension | 0,03 |
| Aquaflow^{R} NHS 300 | Epaississant | 2,53 |
| Acrysol^{R} RM-8 W | Epaississant | 2,98 |
| **Total peinture** | | **100** |

### Caractéristiques des formulations (calculées grâce au logiciel de formulation « PV6FORMULA Version 2-3 » de Pierre Vergne - Inter Deposit Digital Number: IDDN.FR.001.280022.001.S.P.2001.000.30265) :

Concentration volumique pigmentaire : CPV = 19%
Extrait sec en poids = 54,1%
Extrait sec en volume = 41%
Densité : d = 1,28

### 6) Performances mesurées et méthodes utilisées

### a) Viscosité

Les viscosités des peintures sont mesurées à l'aide d'un viscosimètre à haut gradient de cisaillement CAP 1000 à 25°C et à 10000 s⁻¹ (selon la norme ISO 2884), et à l'aide d'un viscosimètre Brookfield à bas gradient de cisaillement, à 10 rpm (selon la norme ISO 2555).

### b) pH

Le pH des formulations de peinture est mesuré selon la norme ISO 976.

### c) Brillant

Les mesures sont effectuées à l'aide d'un brillancemètre « Micro-TRI-gloss » de BYK Gardner GmbH sous des angles de 20° et 60°, après 24 heures de séchage à 23°C ± 1°C et à 50% ± 5% HR, sur des films de dispersions aqueuses non formulés de 150 µm déposés sur des cartes Leneta 2A et sur des films de peinture de 200 m déposés sur plaques de verre, selon la norme ISO 2813.

### d) Dureté

La dureté est évaluée à l'aide d'un pendule de dureté Persoz sur des films humides de 100 µm appliqués sur plaques de verre, après 14 jours de séchage (à 23°C ± 1°C et à 50% ± 5% HR), selon la norme ISO 1522.

### e) Résistance au blocking

Les peintures à évaluer sont appliquées sur deux cartes Leneta 2A à une épaisseur choisie, à l'aide d'un filmographe. Ces peintures sont stockées dans une salle climatisée (à 23°C + 1°C et à 50% + 5% HR) pendant un temps déterminé. Les faces peintes de ces cartes sont ensuite placées face à face entre 2 plaques de verre. L'ensemble est pressé par une masse permettant d'obtenir une pression de 50 g/cm² sur toute la surface d'essai. Les faces peintes sont laissées en contact en salle climatisée, pendant un temps déterminé. A la fin du temps de contact, les cartes sont séparées délicatement en tirant sur les 2 cartes, dans toutes les directions.

Les dommages occasionnés sur les films de peintures sont alors quantifiés sur une échelle variant de 0 à 8 selon indications données au tableau 6 ci-dessous :

**Tableau 6 : Echelle d'évaluation de la résistance au blocking**

| | |
|---|---|
| **0** | Aucune adhérence entre les films et aucun bruit lors de la séparation des cartes |
| **1** | Détachement des films avec un léger bruit, mais sans altération de la surface d'essai |
| **2** | Arrachement < à 10 points sur la surface d'essai |
| **3** | Arrachement < à 50 points sur la surface d'essai |
| **4** | Arrachement > à 50 points sur la surface d'essai |
| **5** | Arrachement de la surface < à 20% de la surface d'essai |
| **6** | Arrachement de la surface entre 20 et 50% de la surface d'essai |
| **7** | Arrachement de la surface > à 50% de la surface d'essai |
| **8** | Arrachement total de la surface d'essai |

Les épaisseurs, temps de séchage et temps de contact choisis sont les suivants :
- 200 µm humide / 24 heures de temps de séchage à 23°C ± 1°C, 50% ± 5% HR / 24 heures de temps de contact à 23°C ± 1°C, 50% ± 5% HR.

### f) Résistance à l'eau

Des films humides de 200 µm sont appliqués sur des plaques de verre, puis séchés pendant 7 jours en salle climatisée (23°C +/- 1°C et 50% +/- 5% HR).

Des gouttes d'eau sont ensuite déposées pendant un temps déterminé (15 minutes, 30 minutes) à la surface des films de peintures, et les dommages causés sont évalués, avant séchage et après 24 heures de séchage, sur une échelle variant de 0 à 4, selon données du tableau 7, ci-dessous :

**Tableau 7 : Evaluation de la résistance à l'eau**

| | |
|---|---|
| **0** | Destruction partielle ou totale du film de peinture |
| **1** | Cloquage intense du film de peinture |
| **2** | Cloquage du film de peinture visible à l'oeil nu |
| **3** | Trace à peine visible à l'oeil nu (micro-cloquage, gonflement, etc...) |
| **4** | Pas d'altération du film de peinture |

### g) Résistance à la tâche

La résistance aux tâches domestique est testée sur les peintures appliquées à 200 µm humide sur des plaques PVC Leneta P121-10N après une semaine de séchage. Les tâches sont en contact avec la peinture à tester pendant 15 min, selon le modèle ci-dessous. La cotation se fait selon la norme NF EN 12720 après nettoyage de la tâche à l'aide d'une solution diluée de Teepol. Cette cotation tient compte des pertes de brillant, des variations de coloration ou des modifications de la structure du film de peinture testé :
5- Aucun changement visible (aucun dommage).
4- Léger changement de brillance ou de couleur, visible uniquement lorsque la source de lumière se reflète sur la surface d'essai ou de très près du point examiné, et est renvoyée vers l'oeil de l'observateur, ou quelques marques isolées à peine visible.
3- Marque légère, visible sous plusieurs angles d'observation.
2- Marque prononcée, la structure de la surface étant toutefois pratiquement inchangée.
1- Marque prononcée, la structure de la surface étant modifiée, ou bien le matériau étant totalement ou partiellement enlevé. Les tâches testées sont à base de : vin rouge, café, encre bleue.

### h) Test de flexibilité

Deux couches de peintures (séchage intercouche de 24 heures) sont déposées avec un rendement de 10 m²/l sur une cornière en pin de 12 cm de longueur suivant le schéma ci-dessous.

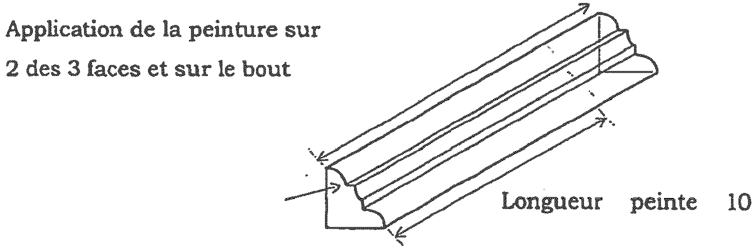

Après une semaine de séchage en salle climatisée (à 23°C +/- 1 et 50% +/-5% RH), les éprouvettes sont soumises à 5 cycles de gel/dégel (gel : 16 heures d'immersion dans l'eau dans un congélateur / dégel : 8 heures en salle climatisée après retrait de la glace formée sous l'eau courante).

Les défauts de surface (fissuration / cloquage) sont notés à chaque fin de cycle sur une échelle variant de 0 à 10, comme indiqué au tableau 8, ci-dessous :

**Tableau 8 : Echelle d'évaluation selon test flexibilité**

| **Fissuration** | | **Cloquage** | | |
|---|---|---|---|---|
| **Note** | **Densité** | **Note** | **Densité** | **Taille moyenne** |
| 10 | Aucune fissuration | 5 | Aucune | Aucun cloquage |
| 8 | Léger | 4 | < 2 cloques | < 2 mm |
| 6 | Moyen | 3 | < 5 cloques | < 5 mm |
| 4 | Prononcé | 2 | < 7 cloques | < 7 mm |
| 2 | Sévère | 1 | < 10 cloques | < 10 mm |
| 0 | Totale | 0 | > 10 cloques | 10 mm |

La note correspondant au cloquage, correspond à la note de la densité + la note de la taille moyenne de cloquage.

### B) Résultats de caractérisation et comparaisons

### 1) TMF et filmification

Pour juger de la maîtrise de la structure visée des particules lors de la préparation des dispersions, les critères significatifs suivants ont été utilisés :
TMF : elle est obtenue sans agent de coalescence et correspond parfaitement à celle qui est attendue comme la conséquence de la structure effectivement contrôlée coeur P1/écorce P2, dur/mou. Le tableau 9 donne une estimation de la valeur de la TMF attendue en fonction de l'épaisseur de l'écorce (% P2) et de sa Tg (Tg2). La valeur estimée de TMF résulte d'une estimation à partir de la corrélation de TMF mesurées en fonction de Tg2, pour différents % de P2 pour des particules structurées comme mentionné.
La prédiction selon les données du tableau 9 est plus préférentiellement vérifiée quand, pour un % de P1 > 35%, la Tg1 reste inférieure à 75°C.

**Tableau 9 : TMF attendue, estimée en fonction des caractéristiques de l'écorce**

| **Tg2** | | **% P2** | |
|---|---|---|---|
| | 55% | 60% | 72% |
| -15°C | 0 à 5°C | 0 à 5°C | < 0°C |
| -10°C | 5 à 10°C | 0 à 5°C | < 0°C |
| 5°C | 10 à 15°C | 5 à 10°C | < 2°C |
| 0°C | 15 à 20°C | 10 à 15°C | 0 à 5°C |
| 5°C | 20 à 25°C | 15 à 20°C | 5 à 10°C |

Les valeurs de Tg2 sont calculées selon la loi de Fox, comme déjà expliqué ci-haut pour les Tg.
La filmification : elle est excellente, sans agent de coalescence, le film est parfaitement transparent (homogène et sans défauts).
Par transparent, on entend qu'un film de 200 µm humide appliqué sur plaque de verre est homogène et sans défaut dans des conditions de séchage en température variant entre 5 et 25°C. Les conditions d'hygrométrie sont comprises entre 25 et 75% et adaptées à la température de filmification : plus elle est basse, plus l'hygrométrie est élevée. Dans de telles conditions, le phénomène dit de mudd cracking, cinétique de séchage en surface mal contrôlée, ne concerne pas ce type de film.

Ces caractéristiques sont données pour chaque dispersion dans le tableau 10 ci-dessous :

**Tableau 10 : Caractérisation de filmification des dispersions des essais 1 à 7**

| | Remarques | TMF mesurée (°C) | TMF (°C) attendue vs particule structurée coeur P1/écorce P2 | %P2 | Tg2(°C) | Tg (°C) moyenne | Qualité du film |
|---|---|---|---|---|---|---|---|
| 1 | comparatif | 5 | 0-5 | 72 | 0 | 18 | Transparent |
| 2 | comparatif | 2 | 0-5 | 60 | -15 | 12 | Transparent |
| 3 | comparatif P1 sans M1 | 11 | 0-5 | 72 | 0 | 18 | Trouble |
| 4 | comparatif P1 sans M2 | 16 | 0-5 | 72 | 0 | 18 | Transparent |
| 5 | comparatif P1 sans M1 et M2 | 16 | 0-5 | 72 | 0 | 18 | Trouble |
| 6 | comparatif | 5 | 0-5 | 60 | -10 | 17 | Transparent |
| 7 | comparatif avec effet M5 (ajout de Radia 7061 dans P2) | 2 | 0-5 | 60 | -10 | 17 | Transparent |

Seuls les films 1, 2, 6 et 7 sont transparents (homogènes et sans défauts) et avec une TMF expérimentale dans l'intervalle de TMF attendue selon données du tableau 9. Les autres essais conduisent à des films troubles et/ou présentant une TMF plus élevée que celle attendue et plus proche de la Tg moyenne selon Fox (de P1 et P2), ce qui correspondrait ici, dans un tel cas, à une perte au moins partielle de la structure des particules obtenues. Ces résultats sont montrés dans le tableau 11 ci-dessous :

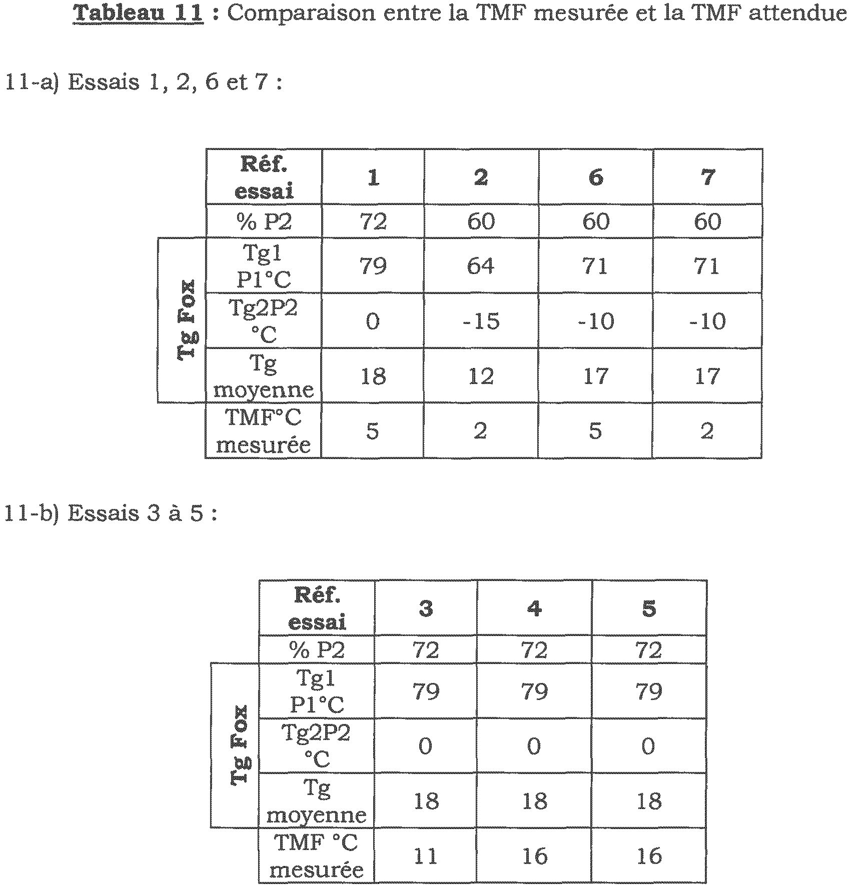

### 2) Performances de stabilité de la dispersion

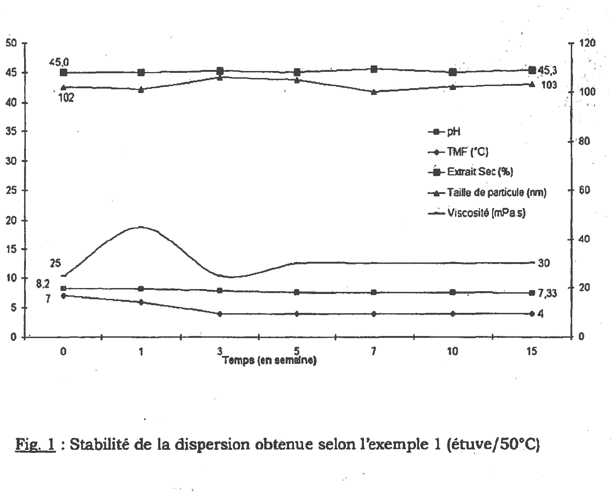

Le suivi au cours du temps des caractéristiques telles que viscosité pH, extrait sec, taille des particules, de la dispersion de l'exemple 1, mise à l'étuve à 50°C, a permis de mettre en évidence que toutes les caractéristiques de la dispersion obtenue sont parfaitement stables. De façon remarquable, la TMF est stable après 15 semaines de test à 50°C (voir figure 1). Cette caractéristique a été reproduite à l'identique sur les essais 1, 2, 6 et 7.

### 3) Résultats sur formulations de peintures acryliques (tableau 12)

L'épaisseur du film de peinture et son mode d'application varient suivant le test désiré.

Pour chaque mesure, se référer à la méthode de test correspondante aux paragraphes A, 4 à 6.

**Tableau 12 : résultats sur peintures acryliques**

| Dispersion utilisée selon exemple (tableau 2) | | **1** | **6** | **7** |
|---|---|---|---|---|
| VOC (g/L) | | < 30 | < 30 | < 30 |
| Viscosité Brookfield à 10 rpm (mPa.s) | 1 jour | 6060 | 3310 | 3640 |
| | 15 jours à 23°C | 9000 | 3600 | 4250 |
| Viscosité CAP 1000 à 25°C à 10000 s⁻¹ (mPa.s) | 1 jour | 178 | 225 | 166 |
| | 15 jours à 23°C | 208 | 229 | 222 |
| pH fin de la fabrication | | 8,8 | 8,7 | 8,7 |

Les valeurs de VOC (en g/L) sont calculées grâce au logiciel de formulation « PV6FORMULA Version 2-3 » tel que décrit précédemment.

Les mesures de viscosité montrent que les formulations de peintures présentent une bonne stabilité au stockage.

### 4) Résultats sur peintures alkyde-acryliques, à base de mélanges des dispersions d'alkydes avec les dispersions de polymère selon les exemples 1 et 7

La préparation des peintures alkyde-acryliques est décrite au paragraphe A 5. et plus particulièrement 5.3, tableau 5.

**Tableau 13 : résultats sur peintures alkyde-acryliques**

| Dispersion de polymère selon exemple indiqué + Synaqua 4804 | | **1** | **7** |
|---|---|---|---|
| VOC (g/L) | | < 30 | < 30 |
| Viscosité Brookfield à 10 rpm (mPa.s) | 1 jour | 7040 | 13200 |
| | 15 jours à 23°C | 8930 | 16600 |
| Viscosité CAP 1000 à 25°C à 10000 s⁻¹ (mPa.s) | 1 jour | 335 | 357 |
| | 15 jours à 23°C | 313 | 336 |

Les valeurs de VOC (en g/L) sont calculées grâce au logiciel de formulation « PV6FORMULA Version 2-3 » tel que décrit précédemment.

### 5) Performances des films des dispersions de polymère (émulsions) et des peintures acryliques correspondantes

**Tableau 14 : performances des films d'émulsion et de peinture acrylique**

| **Dispersion de polymère selon exemple** | | | **1** |
|---|---|---|---|
| Film d'émulsion | Résistance à la traction | Allongement à la rupture (%) | 121 (11%) |
| | | Contrainte à la rupture (MPa) | 14,3 (7,9%)* |
| | | Module d'Young (MPa) | 145 (6,7%) |
| Film de Peinture | Brillant | 20° | 49 |
| | | 60° | 80 |
| | Test flexibilité Fissuration / Cloquage | Avant le test | 10/10 |
| | | Après 1er cycle | 10/10 |
| | | 2ème cycle | 10/10 |
| | | 3ème cycle | 10/10 |
| | | 4ème cycle | 9/10 |
| | | 5ème cycle | 9/10 |
| *Les valeurs données entre parenthèses correspondent au pourcentage d'écart-type. | | | |

Les propriétés mécaniques des films d'émulsion et le test de flexibilité du film de peinture permettent d'évaluer la flexibilité et la cohésion du revêtement obtenu.

L'exemple 1 présente un allongement et une contrainte à la rupture élevés : ces résultats montrent que le film obtenu à partir de l'exemple 1 est flexible et cohésif. Ces observations sont confirmées par les très bons résultats obtenus par le test de flexibilité : l'exemple permet d'obtenir un revêtement très stable au fil des cycles gel-dégel.

### 6) Influence de la présence du monomère M5 sur les performances des films des peintures acryliques

**Tableau 15 : performances des films des peintures acryliques**

| **Avec dispersion selon exemple** | | **1** | **6** | **7** |
|---|---|---|---|---|
| Brillant | 20° | 49 | 53 | 50 |
| | 60° | 80 | 77 | 77 |
| Dureté Persoz (s) | après 24 heures | 117 | 106 | 81 |
| | après 7 jours | 124 | 144 | 95 |
| Résistance au blocking | après 24h de séchage + 24h de contact à 23°C | 1 | 1 | 1 |
| | Après 48h de séchage + 1h de contact à 50°C | 2 | 4 | 1 |
| Résistance à l'eau avant séchage / après 24h de séchage | après 15 min | 1/3 | 1/3 | 1/3 |
| | après 30 min | 1/3 | 1/3 | 1/3 |
| Résistance à la tâche après 15 min | Vin rouge | 2 | 3 | 3 |
| | Café | 3 | 2 | 2 |
| | Encre bleue | 2 | 2 | 2 |

Les résultats présentés dans le tableau 15 montrent un très bon compromis de propriétés en terme de brillant, dureté, résistance au blocking, à l'eau et aux tâches.

La résistance au blocking des deux essais est excellente après 24 heures de séchage et 24 heures de contact à 23°C. Une différence est notée lorsque le test est réalisé dans des conditions plus critiques, après 48 heures de séchage et 1 heure de contact à 50°C. Dans ce dernier cas, on observe que l'ajout de l'ester méthylique de l'huile de lin dans l'exemple 7 permet d'améliorer nettement la résistance au blocking.

### 7) Influence de la présence du monomère M5 sur les performances des films des peintures alkyde-acryliques

**Tableau 16 : performances des films des peintures alkyde-acryliques**

| **Formule avec dispersion selon l'exemple cité dispersion alkyde Synaqua 4804** | | **6** | **7** |
|---|---|---|---|
| Brillant | 20° | 59 | 65 |
| | 60° | 100 | 90 |
| Dureté Persoz (s) | après 24 heures | 97 | 91 |
| | après 7 jours | 164 | 142 |
| Résistance au blocking | après 24h de séchage + 24h de contact à 23°C | 1 | 1 |
| Résistance à l'eau avant séchage / après 24h de séchage | après 15 min | 3/4 | 3/4 |
| | après 30 min | 3/4 | 3/4 |

Les dispersions acryliques obtenues présentent une très bonne compatibilité avec les alkydes. Les résultats contenus dans le tableau 16 montrent que le mélange permet d'améliorer de façon notable le brillant du film, ainsi que la résistance à l'eau, et conduit à un très bon niveau de dureté après 7 jours. Par ailleurs, la résistance au blocking des deux formules reste identique et excellente.

## Revendications

1. Dispersion aqueuse de polymère comprenant des particules structurées en coeur/écorce dur/mou, **caractérisée en ce que** :
- la phase polymère du coeur P1 a une température de transition vitreuse Tg1 de 60 à 120°C, de préférence de 60 à 100°C, et
- la phase polymère de l'écorce P2 a une température de transition vitreuse Tg2 de -20 à 40°C, de préférence de -15 à 30°C, Tg1 et Tg2 étant calculées selon la relation de Fox et que
- ladite dispersion présente une température minimum de filmification TMF de 0 à 50°C, de préférence de 0 à 40°C, mesurée selon la norme ISO 2115
- la phase P1 représente 15 à 60%, de préférence de 20 à 60% et plus préférentiellement de 20 à 55% en poids par rapport au poids total de monomères de ladite dispersion, et
- la phase P1 comprend au moins un monomère M1 possédant au moins deux insaturations éthyléniques copolymérisables (ayant une fonction d'agent réticulant) et au moins un monomère M2 éthyléniquement insaturé porteur d'au moins une fonction d'acide et/ou anhydride carboxylique,
- la phase P2 représente 40 à 85%, de préférence de 40 à 80% et plus préférentiellement de 45 à 80% en poids du total des monomères de ladite dispersion
**en ce que** ladite phase P2 comprend :
- au moins un monomère M3 sélectionné parmi les monomères portant en plus de l'insaturation éthylénique polymérisable, au moins un groupement sélectionné parmi acétoacétoxy, diacétone, méthylol, ou alkoxysilane, de préférence sélectionné parmi la diacétone acrylamide (DAAM), le N-méthylol acrylamide (NMA), l'acétoacétoxyéthyl méthacrylate (AAEM) et les (méth)acrylates d'alkoxysilane
**en ce que** ladite phase P2 comprend en plus au moins un agent de transfert sélectionné parmi les mercaptans hydrophiles (ou portant un groupement ionique), et
**en ce que** ladite phase P2 comprend au moins un deuxième agent de transfert sélectionné parmi les mercaptans hydrophobes avec un rapport en poids d'agent hydrophile sur agent hydrophobe supérieur à 1 et de préférence supérieur à 1,5.

2. Dispersion selon la revendication 1, **caractérisée en ce que** ladite dispersion comprend à l'état dispersé au moins une polyamine ayant au moins deux fonctions amines dans le cas où ledit monomère M3 porte un groupement acétoacétoxy et au moins un composé en C4 à C8 portant au moins deux fonctions hydrazides dans le cas où ledit monomère M3 porte un groupement diacétone.

3. Dispersion selon la revendication 1 ou 2, **caractérisée en ce que** ladite phase P1 est constituée d'une phase polymère de semence P0 et d'une phase polymère P'1 complémentaire et que la composition de ladite phase P0 est exempte desdits monomères M1 et M2 et que sur le reste, les compositions de P0 et P'1 sont identiques ou différentes.

4. Dispersion selon l'une des revendications 1 à 3, **caractérisée en ce que** le taux global desdits premier et deuxième agents de transfert représente en poids de 0,02 à 2% et de préférence de 0,05 à 1,5% par rapport au poids total des monomères de ladite dispersion (phases P1+P2).

5. Dispersion selon l'une des revendications 1 à 4, **caractérisée en ce que** : pour un taux en poids de P1 dépassant 35%, de préférence dépassant 30%, ladite Tg1 reste inférieure à 75°C.

6. Dispersion selon l'une des revendications 1 à 5, **caractérisée en ce que** la différence entre lesdites Tg1 et Tg2 varie de 20 à 140°C et de préférence de 30 à 115°C.

7. Dispersion selon l'une des revendications 1 à 6, **caractérisée en ce que** le monomère M1 de la phase P1 est choisi parmi les monomères esters allyliques monofonctionnels ou multifonctionnels dérivés d'acides carboxyliques ou dicarboxyliques α,β-insaturés ou esters allyliques multifonctionnels d'acides di- ou polycarboxyliques saturés ou autres monomères polyallyliques, les esters (méth)acryliques multifonctionnels de fonctionnalité d'au moins 2 et les polyvinylbenzènes.

8. Dispersion selon l'une des revendications 1 à 7, **caractérisée en ce que** ledit monomère M2 de la phase P1 est choisi parmi les acides : (méth)acrylique fumarique, maléique, itaconique, vinylbenzoïque, crotonique ou isocrotonique et/ou leurs anhydrides et de préférence l'acide méthacrylique et/ou acrylique.

9. Dispersion selon l'une des revendications 1 à 8, **caractérisée en ce que** lesdits monomères M1 et M2 de la phase P1 représentent un taux global en poids allant de 0,5 à 10% et de préférence de 1 à 8% du poids total de la phase P1 avec ledit monomère M2 représentant de 0,1 à 5% et de préférence de 0,2 à 4% en poids de ladite phase P1.

10. Dispersion selon l'une des revendications 1 à 9, **caractérisée en ce que** la phase P2 comprend également au moins un monomère M2 tel que défini selon la revendication 1 ou 7, avec des taux respectifs en poids de M2 dans les phases P1 et P2 choisis de sorte que le rapport du taux en poids de M2 dans P1 sur celui dans P2 varie de 1/1 à 1/10 et de préférence de 1/2 à 1/8.

11. Dispersion selon l'une des revendications 1 à 10, **caractérisée en ce que** ledit monomère M3 est présent dans ladite phase P2 à un taux en poids de 1 à 25%, de préférence. de 1 à 15%, exprimé par rapport au poids total de P1+P2 et avec un % exprimé par rapport à P2 allant de 1 à 60% et de préférence de 1,5 à 40%.

12. Dispersion selon l'une des revendications 1 à 11, **caractérisée en ce que** ledit monomère M3 porte un groupement acétoacétoxy, quantitativement converti sous forme bloquée de groupement ène-amine, in situ lors de la polymérisation correspondant à la phase P2, et **en ce que** dans ce cas, ladite phase P2 est exempte de tout monomère M2 tel que défini selon les revendications 1 ou 8.

13. Dispersion selon l'une des revendications 1 à 12, **caractérisée en ce que** ladite phase P1 comprend également au moins un monomère M3 portant un groupement acétoacétoxy.

14. Dispersion selon la revendication 13, **caractérisée en ce que** ledit groupement acétoacétoxy de la phase P1 est converti quantitativement sous forme bloquée ène-amine, lors de la polymérisation correspondant à la phase P2.

15. Dispersion selon l'une des revendications 1 à 14, **caractérisée en ce que** ladite phase P2 comprend en plus au moins un monomère M4 porteur en plus de l'insaturation éthylénique polymérisable, d'au moins un groupement fonctionnel sélectionné parmi : hydroxy, aminé, oxirane, phosphates, phosphonates ou phosphinates, amide, sulfate ou sulfonate , imide, aziridine, oxazoline ou imidazole, sous condition que le choix des monomères M4 soit réalisé de manière à éviter une réaction entre les différents groupements de monomères M4 ou entre les groupements des monomères M4 et les groupements des autres monomères.

16. Dispersion selon l'une des revendications 1 à 15, **caractérisée en ce que** ladite phase P2 comprend en plus au moins un monomère M5 sélectionné parmi au moins une huile (esters de glycérol) d'acides gras insaturés en C10 à C36 et/ou esters méthyliques correspondants à ces acides, de préférence au moins une huile de lin ou un ester méthylique d'acide linoleique et/ou linolénique.

17. Dispersion selon l'une des revendications 1 à 16, **caractérisée en ce que** ladite phase P2 comprend à la fois le monomère M3 dans les conditions telles que définies selon la revendication 11, et le monomère M5 tel que défini selon la revendication 16.

18. Procédé de préparation d'une dispersion telle que définie selon l'une des revendications 1 à 17, **caractérisé en ce qu'**il comprend au moins les 3 étapes suivantes :
a) une étape d'ensemencement comprenant une prépolymérisation d'une composition de semence P0 exempte de monomères M1 et M2 avec des particules de semence ayant une taille inférieure ou égale à 30 nm, et représentant un taux en poids allant de 2 à 25% et de préférence de 5 à 20% du poids de ladite phase P1
ii) une étape de polymérisation d'une composition de monomères P'1 comprenant lesdits monomères M1 et M2 et donnant la phase polymère P'1, constituant ainsi avec le polymère de semence P0 obtenu à l'étape i), ladite phase de polymère P1 dudit coeur de particule, ladite composition de monomères P'1, hormis la présence des monomères M1 et M2, pouvant être identique ou différente de celle de ladite composition de semence P0
iii) une étape de polymérisation d'une composition de monomères P2, donnant lieu à ladite phase P2.

19. Procédé selon la revendication 18, **caractérisé en ce que** :
- l'étape d'ensemencement i) est réalisée en présence de 0,1 à 1,5%, de préférence de 0,3 à 1,2% en poids du poids total P1+P2 d'au moins un tensioactif anionique
- l'étape de polymérisation ii) de la composition de monomères P'1 est réalisée en présence de 0,1 à 3%, de préférence 0,1 à 1,5% en poids du poids total P1+P2, d'au moins un tensioactif anionique, pouvant être le même ou différent de celui de la semence P0 et d'un deuxième tensioactif anionique différent du premier, avec le taux en poids de ces deux tensioactifs anioniques de P1 restant compris entre 0,1 à 3%, de préférence 0,1 à 1,5% du poids total de P1+P2
- l'étape de polymérisation iii) de la composition de monomères P2 est réalisée en présence de 0,1 à 3%, de préférence de 0,2 à 2,5% en poids du poids total P1+P2, d'au moins deux tensioactifs :
a) le premier étant non ionique et de préférence choisi parmi les alcools gras alcoxylés, de préférence alcools gras en C12 à C16 alcoxylés, avec comme unités alcoxy préférées des unités éthoxy et/ou propoxy et plus préférentiellement des unités éthoxy, le nombre desdites unités alcoxy étant de préférence de 3 à 50 et plus préférentiellement de 5 à 40 unités éthoxy
b) le deuxième étant anionique et pouvant être identique ou différent de celui défini pour P0.

20. Procédé selon l'une des revendications 18 ou 19, **caractérisé en ce que** :
- les étapes i) et ii) sont réalisées à une température de 75 à 90°C
- l'étape de polymérisation iii) de ladite composition de monomères P2 est réalisée à une température inférieure à Tg1, lorsque ledit procédé est mis en oeuvre à pression atmosphérique.

21. Procédé selon l'une des revendications 18 à 20, **caractérisé en ce que** l'étape ii) de polymérisation en émulsion de la composition de monomères P'1 (de préférence P1) est poursuivie jusqu'à un taux de conversion d'au moins 95%, avant addition de la composition de monomères P2.

22. Dispersion aqueuse de polymère, **caractérisée en ce qu'**elle comprend au moins une dispersion aqueuse de polymère telle que définie selon l'une des revendications 1 à 17 ou telle qu'obtenue par un procédé tel que défini selon l'une des revendications 18 à 21, et **en ce qu'**elle comprend en plus, au moins une autre, deuxième dispersion aqueuse de polymère et de préférence avec un polymère à base de résines polyesters saturés et/ou insaturés, de préférence à base de polyesters insaturés et plus préférentiellement de résines alkydes, à base de copolymères acryliques, à base d'oligomères acryliques acrylés, à base de polyuréthanes ou à base de résines d'hydrocarbures.

23. Dispersion selon la revendication 22, **caractérisée en ce que** ladite deuxième dispersion aqueuse de polymère est à base d'au moins une résine alkyde modifiée ou non modifiée.

24. Dispersion aqueuse selon la revendication 23, **caractérisée en ce que** le taux en poids de ladite résine alkyde représente de 15 à 45% du total alkyde + polymère (alkyde+P1+P2) de la dispersion telle que définie selon l'une des revendications 1 à 17.

25. Dispersion aqueuse selon la revendication 23 ou 24, **caractérisée en ce que** ladite dispersion aqueuse comprend comme dispersion de polymère au moins une dispersion aqueuse telle que définie selon la revendication 16.

26. Composition de revêtement ou de traitement, **caractérisée en ce qu'**elle comprend au moins une dispersion aqueuse telle que définie selon l'une des revendications 1 à 17 ou selon les revendications 23 à 25.

27. Composition de revêtement selon la revendication 26, **caractérisée en ce qu'**il s'agit d'une composition de revêtement de protection et/ou de décoration sélectionnée parmi les peintures, vernis, lasures, encres ou adhésifs.

28. Composition selon la revendication 27, **caractérisée en ce qu'**il s'agit d'une composition de traitement de fibres.

29. Utilisation d'une dispersion aqueuse telle que définie selon l'une des revendications 1 à 17 ou selon les revendications 23 à 25, **caractérisée en ce qu'**il s'agit d'une utilisation dans les revêtements de protection et/ou de décoration ou d'une utilisation dans le traitement de fibres.

30. Revêtement **caractérisé en ce qu'**il est obtenu par l'utilisation d'au moins une dispersion telle que définie selon l'une des revendications 1 à 17 ou selon l'une des revendications 23 à 25 ou par l'utilisation d'une composition de revêtement telle que définie selon l'une des revendications 26 à 28.

31. Substrat revêtu **caractérisé en ce qu'**il est revêtu par au moins une couche d'au moins une composition de revêtement telle que définie selon l'une des revendications 26 à 28.

32. Fibre traitée, **caractérisée en ce qu'**elle est traitée par au moins une composition de traitement telle que définie selon la revendication 28.

## Patentansprüche

1. Wässrige Polymerdispersion, umfassend Teilchen mit Hart/Weich-Kern/Schale-Struktur, **dadurch gekennzeichnet, dass**:
- die Kernpolymerphase P1 eine Glasübergangstemperatur Tg1 von 60 bis 120°C und vorzugsweise 60 bis 100°C aufweist und
- die Schalenpolymerphase P2 eine Glasübergangstemperatur Tg2 von -20 bis 40°C und vorzugsweise -15 bis 30°C aufweist, wobei Tg1 und Tg2 gemäß der Fox-Beziehung berechnet werden, und
- die Dispersion eine Mindestfilmbildungstemperatur MFT von 0 bis 50°C und vorzugsweise 0 bis 40°C, gemessen gemäß ISO-Norm 2115, aufweist,
- die Phase P1 15 bis 60 Gew.-%, vorzugsweise 20 bis 60 Gew.-% und weiter bevorzugt 20 bis 55 Gew.-%, bezogen auf das Gesamtgewicht der Monomere der Dispersion, ausmacht und
- die Phase P1 mindestens ein Monomer M1 mit mindestens zwei copolymerisierbaren ethylenischen Ungesättigtheiten (mit Vernetzungsmittelfunktion) und mindestens ein ethylenisch ungesättigtes Monomer M2 mit mindestens einer Carbonsäure- und/oder Carbonsäureanhydridfunktion umfasst,
- die Phase P2 40 bis 85 Gew.-%, vorzugsweise 40 bis 80 Gew.-% und weiter bevorzugt 45 bis 80 Gew.-% der Gesamtheit der Monomere der Dispersion ausmacht,
dass die Phase P2
- mindestens ein Monomer M3, das aus Monomeren ausgewählt ist, die neben der polymerisierbaren ethylenischen Ungesättigtheit mindestens eine aus Acetoacetoxy, Diaceton, Methylol oder Alkoxysilan und vorzugsweise aus Diacetonacrylamid (DAAM), N-Methylolacrylamid (NMA), Acetoacetoxyethylmethacrylat (AAEM) und Alkoxysilan(meth)acrylaten ausgewählte Gruppe umfassen,
umfasst,
dass die Phase P2 außerdem mindestens ein Übertragungsmittel, das aus hydrophilen Mercaptanen (oder Mercaptanen mit einer ionischen Gruppe) ausgewählt ist, umfasst und
dass die Phase P2 mindestens ein zweites Übertragungsmittel, das aus hydrophoben Mercaptanen ausgewählt ist, umfasst, wobei das Gewichtsverhältnis von hydrophilem Mittel zu hydrophobem Mittel größer als 1 und vorzugsweise größer als 1,5 ist.

2. Dispersion nach Anspruch 1, **dadurch gekennzeichnet, dass** die Dispersion in dem Fall, dass das Monomer M3 eine Acetoacetoxygruppe trägt, mindestens ein Polyamin mit mindestens zwei Aminfunktionen und in dem Fall, dass das Monomer M3 eine Diacetongruppe trägt, mindestens eine C4- bis C8-Verbindung mit mindestens zwei Hydrazidfunktionen in dispergiertem Zustand umfasst.

3. Dispersion nach Anspruch 1 oder 2, **dadurch gekennzeichnet, dass** die Phase P1 aus einer Saatpolymerphase P0 und einer komplementären Polymerphase P'1 besteht und die Zusammensetzung der Phase P0 von den Monomeren M1 und M2 frei ist und die Zusammensetzungen von P0 und P'1 bezüglich des Rests gleich oder verschieden sind.

4. Dispersion nach einem der Ansprüche 1 bis 3, **dadurch gekennzeichnet, dass** der Gesamtgehalt des ersten und zweiten Übertragungsmittels 0,02 bis 2 Gew.-% und vorzugsweise 0,05 bis 1,5 Gew.-%, bezogen auf das Gesamtgewicht der Monomere der Dispersion (Phasen P1+P2), ausmacht.

5. Dispersion nach einem der Ansprüche 1 bis 4, **dadurch gekennzeichnet, dass** für einen Gewichtsgehalt an P1 von mehr als 35% und vorzugsweise mehr als 30% die Tg1 unter 75°C bleibt.

6. Dispersion nach einem der Ansprüche 1 bis 5, **dadurch gekennzeichnet, dass** die Differenz zwischen der Tg1 und der Tg2 von 20 bis 140°C und vorzugsweise 30 bis 115°C variiert.

7. Dispersion nach einem der Ansprüche 1 bis 6, **dadurch gekennzeichnet, dass** das Monomer M1 der Phase P1 aus monofunktionellen oder polyfunktionellen Allylestermonomeren, die sich von α,β-ungesättigten Carbonsäuren oder Dicarbonsäuren ableiten, oder polyfunktionellen Allylestern von gesättigten Di- oder Polycarbonsäuren oder anderen Polyallylmonomeren, polyfunktionellen (Meth)Acrylsäureestern mit einer Funktionalität von mindestens 2 und Polyvinylbenzolen ausgewählt ist.

8. Dispersion nach einem der Ansprüche 1 bis 7, **dadurch gekennzeichnet, dass** das Monomer M2 der Phase P1 aus (Meth)Acrylsäure, Fumarsäure, Maleinsäure, Itaconsäure, Vinylbenzoesäure, Crotonsäure oder Isocrotonsäure und/oder deren Anhydriden und vorzugsweise Methacrylsäure und/oder Acrylsäure ausgewählt ist.

9. Dispersion nach einem der Ansprüche 1 bis 8, **dadurch gekennzeichnet, dass** die Monomere M1 und M2 der Phase P1 einen Gesamtgewichtsgehalt im Bereich von 0,5 bis 10% und vorzugsweise 1 bis 8% des Gesamtgewichts der Phase P1 ausmachen, wobei das Monomer M2 0,1 bis 5 Gew.-% und vorzugsweise 0,2 bis 4 Gew.-% der Phase P1 ausmacht.

10. Dispersion nach einem der Ansprüche 1 bis 9, **dadurch gekennzeichnet, dass** die Phase P2 ebenfalls mindestens ein Monomer M2 gemäß Anspruch 1 oder 7 umfasst, wobei die jeweiligen Gewichtsgehalte von M2 in den Phasen P1 und P2 so gewählt sind, dass das Verhältnis des Gewichtsgehalts von M2 in P1 zum Gewichtsgehalt von M2 in P2 von 1/1 bis 1/10 und vorzugsweise 1/2 bis 1/8 variiert.

11. Dispersion nach einem der Ansprüche 1 bis 10, **dadurch gekennzeichnet, dass** das Monomer M3 in der Phase P2 in einem Gewichtsgehalt von 1 bis 25% und vorzugsweise 1 bis 15%, ausgedrückt in Bezug auf das Gesamtgewicht von P1+P2, und in einem %-Anteil, ausgedrückt in Bezug auf P2, im Bereich von 1 bis 60% und vorzugsweise 1,5 bis 40%, vorliegt.

12. Dispersion nach einem der Ansprüche 1 bis 11, **dadurch gekennzeichnet, dass** das Monomer M3 eine während der der Phase P2 entsprechenden Polymerisation in situ quantitativ in die blockierte Enamingruppenform umgewandelte Acetoacetoxygruppe trägt und in diesem Fall die Phase P2 von jeglichem Monomer M2 gemäß den Ansprüchen 1 oder 8 frei ist.

13. Dispersion nach einem der Ansprüche 1 bis 12, **dadurch gekennzeichnet, dass** die Phase P1 ebenfalls mindestens ein Monomer M3 mit einer Acetoacetoxygruppe umfasst.

14. Dispersion nach Anspruch 13, **dadurch gekennzeichnet, dass** die Acetoacetoxygruppe der Phase P1 während der der Phase P2 entsprechenden Polymerisation quantitativ in die blockierte Enamingruppenform umgewandelt wird.

15. Dispersion nach einem der Ansprüche 1 bis 14, **dadurch gekennzeichnet, dass** die Phase P2 außerdem mindestens ein Monomer M4 umfasst, das neben der polymerisierbaren ethylenischen Ungesättigtheit mindestens eine aus Hydroxy, Amin, Oxiran, Phosphaten, Phosphonaten oder Phosphinaten, Amid, Sulfat oder Sulfonat, Imid, Aziridin, Oxazolin oder Imidazol ausgewählte funktionelle Gruppe trägt, unter der Bedingung, dass die Wahl der Monomere M4 so getroffen wird, dass eine Reaktion zwischen den verschiedenen Gruppen von Monomeren M4 oder zwischen den Gruppen der Monomere M4 und den Gruppen der anderen Monomere vermieden wird.

16. Dispersion nach einem der Ansprüche 1 bis 15, **dadurch gekennzeichnet, dass** die Phase P2 außerdem mindestens ein Monomer M5 umfasst, das aus mindestens einem Öl (Glycerinestern) von ungesättigten C10- bis C36-Fettsäuren und/oder diesen Säuren entsprechenden Methylestern, vorzugsweise mindestens einem Leinöl oder einem Methylester von Linol- und/oder Linolensäure, ausgewählt ist.

17. Dispersion nach einem der Ansprüche 1 bis 16, **dadurch gekennzeichnet, dass** die Phase P2 sowohl das Monomer M3 unter den in Anspruch 11 definierten Bedingungen als auch das Monomer M5 gemäß Anspruch 16 umfasst.

18. Verfahren zur Herstellung einer Dispersion gemäß einem der Ansprüche 1 bis 17, **dadurch gekennzeichnet, dass** es mindestens die folgenden 3 Schritte umfasst:
i) einen Saatbildungsschritt, umfassend eine Vorpolymerisation einer von den Monomeren M1 und M2 freien Saatzusammensetzung P0 mit Saatteilchen mit einer Größe kleiner gleich 30 nm, die einen Gewichtsgehalt im Bereich von 2 bis 25% und vorzugsweise 5 bis 20% des Gewichts der Phase P1 ausmacht,
ii) einen Schritt der Polymerisation einer Monomerenzusammensetzung P'1, die die Monomere M1 und M2 umfasst und die Polymerphase P'1 ergibt und somit mit dem in Schritt i) erhaltenen Saatpolymer P0 die Polymerphase P1 des Teilchenkerns darstellt, wobei die Monomerenzusammensetzung P'1 abgesehen vom Vorliegen der Monomere M1 und M2 mit derjenigen der Saatzusammensetzung P0 identisch oder davon verschieden sein kann,
iii) einen Schritt der Polymerisation einer Monomerenzusammensetzung P2, die die Phase P2 ergibt.

19. Verfahren nach Anspruch 18, **dadurch gekennzeichnet, dass**:
- der Saatbildungsschritt i) in Gegenwart von 0,1 bis 1,5 Gew.-% und vorzugsweise 0,3 bis 1,2 Gew.-%, bezogen auf das Gesamtgewicht P1+P2, mindestens eines anionischen Tensids durchgeführt wird,
- der Schritt ii) der Polymerisation der Monomerenzusammensetzung P'1 in Gegenwart von 0,1 bis 3 Gew.-% und vorzugsweise 0,1 bis 1,5 Gew.-%, bezogen auf das Gesamtgewicht P1+P2, mindestens eines anionischen Tensids, das mit demjenigen der Saat P0 identisch oder davon verschieden sein kann, und eines zweiten anionischen Tensids, das von dem ersten verschieden ist, durchgeführt wird, wobei der Gewichtsgehalt dieser beiden anionischen Tenside von P1 zwischen 0,1 bis 3% und vorzugsweise 0,1 bis 1,5% des Gesamtgewichts von P1+P2 bleibt,
- der Schritt iii) der Polymerisation der Monomerenzusammensetzung P2 in Gegenwart von 0,1 bis 3 Gew.-% und vorzugsweise 0,2 bis 2,5 Gew.-%, bezogen auf das Gesamtgewicht P1+P2, von mindestens zwei Tensiden durchgeführt wird:
a) wobei das erste Tensid nichtionisch ist und vorzugsweise aus alkoxylierten Fettalkoholen, vorzugsweise alkoxylierten C12-bis C16-Fettalkoholen, wobei als Alkoxy-Einheiten Ethoxy- und/oder Propoxy-Einheiten bevorzugt und Ethoxy-Einheiten weiter bevorzugt sind, wobei die Zahl der Alkoxy-Einheiten vorzugsweise 3 bis 50 und weiter bevorzugt 5 bis 40 Ethoxy-Einheiten beträgt, ausgewählt ist,
b) wobei das zweite Tensid anionisch ist und mit dem für P0 definierten identisch oder davon verschieden sein kann.

20. Verfahren nach einem der Ansprüche 18 oder 19, **dadurch gekennzeichnet, dass**:
- die Schritte i) und ii) bei einer Temperatur von 75 bis 90°C durchgeführt werden,
- der Schritt iii) der Polymerisation der Monomerenzusammensetzung P2 bei einer kleineren Temperatur als Tg1 durchgeführt wird, wenn das Verfahren bei Normaldruck durchgeführt wird.

21. Verfahren nach einem der Ansprüche 18 bis 20, **dadurch gekennzeichnet, dass** der Schritt ii) der Emulsionspolymerisation der Monomerenzusammensetzung P'1 (vorzugsweise P1) vor der Zugabe der Monomerenzusammensetzung P2 bis zu einem Umwandlungsgrad von mindestens 95% fortgesetzt wird.

22. Wässrige Polymerdispersion, **dadurch gekennzeichnet, dass** sie mindestens eine wässrige Polymerdispersion gemäß einem der Ansprüche 1 bis 17 oder eine nach einem Verfahren gemäß einem der Ansprüche 18 bis 21 erhaltene wässrige Polymerdispersion umfasst und außerdem mindestens eine andere, zweite wässrige Polymerdispersion, vorzugsweise mit einem Polymer auf Basis von gesättigten und/oder ungesättigten Polyesterharzen vorzugsweise auf Basis von ungesättigten Polyestern, und weiter bevorzugt Alkydharzen, auf Basis von Acrylcopolymeren, auf Basis von acrylierten Acryloligomeren, auf Basis von Polyurethanen oder auf Basis von Kohlenwasserstoffharzen, umfasst.

23. Dispersion nach Anspruch 22, **dadurch gekennzeichnet, dass** die zweite wässrige Polymerdispersion auf mindestens einem modifizierten oder unmodifizierten Alkydharz basiert.

24. Wässrige Dispersion nach Anspruch 23, **dadurch gekennzeichnet, dass** der Gewichtsgehalt des Alkydharzes 15 bis 45% der Gesamtheit von Alkyd + Polymer (Alkyd+P1+P2) der Dispersion gemäß einem der Ansprüche 1 bis 17 ausmacht.

25. Wässrige Dispersion nach Anspruch 23 oder 24, **dadurch gekennzeichnet, dass** die wässrige Dispersion als Polymerdispersion mindestens eine wässrige Dispersion gemäß Anspruch 16 umfasst.

26. Beschichtungs- oder Behandlungszusammensetzung, **dadurch gekennzeichnet, dass** sie mindestens eine wässrige Dispersion gemäß einem der Ansprüche 1 bis 17 oder gemäß den Ansprüchen 23 bis 25 umfasst.

27. Beschichtungszusammensetzung nach Anspruch 26, **dadurch gekennzeichnet, dass** es sich dabei um eine schützende und/oder dekorative Beschichtungszusammensetzung, die aus Farben, Lacken, Lasuren, Tinten oder Klebstoffen ausgewählt ist, handelt.

28. Zusammensetzung nach Anspruch 27, **dadurch gekennzeichnet, dass** es sich dabei um eine Faserbehandlungszusammensetzung handelt.

29. Verwendung einer wässrigen Dispersion gemäß einem der Ansprüche 1 bis 17 oder gemäß den Ansprüchen 23 bis 25, **dadurch gekennzeichnet, dass** es sich um eine Verwendung in schützenden und/oder dekorativen Beschichtungen oder eine Verwendung bei der Behandlung von Fasern handelt.

30. Beschichtung, **dadurch gekennzeichnet, dass** sie durch Verwendung mindestens einer Dispersion gemäß einem der Ansprüche 1 bis 17 oder gemäß einem der Ansprüche 23 bis 25 oder durch Verwendung einer Beschichtungszusammensetzung gemäß einem der Ansprüche 26 bis 28 erhalten wird.

31. Beschichtetes Substrat, **dadurch gekennzeichnet, dass** es mit mindestens einer Schicht mindestens einer Beschichtungszusammensetzung gemäß einem der Ansprüche 26 bis 28 beschichtet ist.

32. Behandelte Faser, **dadurch gekennzeichnet, dass** sie mit mindestens einer Behandlungszusammensetzung gemäß Anspruch 28 behandelt ist.

## Claims

1. Aqueous polymer dispersion comprising particles structured as a hard/soft core/shell, **characterized in that**:
- the polymer phase of the core P1 has a glass transition temperature Tg1 from 60 to 120°C and preferably from 60 to 100°C, and
- the polymer phase of the shell P2 has a glass transition temperature Tg2 from -20 to 40°C and preferably from -15 to 30°C, Tg1 and Tg2 being calculated according to the Fox relationship, and that
- said dispersion exhibits a minimum film-formation temperature MFFT from 0 to 50°C and preferably from 0 to 40°C, measured according to the ISO standard 2115,
- the phase P1 represents from 15 to 60% by weight, preferably from 20 to 60% by weight and more preferably from 20 to 55% by weight, with respect to the total weight of monomers of said dispersion, and
- the phase P1 comprises at least one monomer M1 having at least two copolymerizable ethylenic unsaturations (having a crosslinking agent role) and at least one ethylenically unsaturated monomer M2 carrying at least one carboxylic acid and/or anhydride functional group,
- the phase P2 represents from 40 to 85% by weight, preferably from 40 to 80% by weight and more preferably from 45 to 80% by weight of the total of the monomers of said dispersion,
**in that** said phase P2 comprises:
- at least one monomer M3 selected from the monomers carrying, in addition to the polymerizable ethylenic unsaturation, at least one group selected from acetoacetoxy, diacetone, methylol or alkoxysilane, preferably selected from diacetone acrylamide (DAAM), N-methylolacrylamide (NMA), acetoacetoxyethyl methacrylate (AAEM) and alkoxysilyl (meth)acrylates,
**in that** said phase P2 additionally comprises at least one transfer agent selected from hydrophilic mercaptans (or mercaptans carrying an ionic group), and
**in that** said phase P2 comprises at least one second transfer agent selected from hydrophobic mercaptans with a ratio by weight of hydrophilic agent to hydrophobic agent of greater than 1 and preferably of greater than 1.5.

2. Dispersion according to Claim 1, **characterized in that** said dispersion comprises, in the dispersed state, at least one polyamine having at least two amine functional groups in the case where said monomer M3 carries an acetoacetoxy group and at least one C₄ to C₈ compound carrying at least two hydrazide functional groups in the case where said monomer M3 carries a diacetone group.

3. Dispersion according to Claim 1 or 2, **characterized in that** said phase P1 is composed of a seed polymer phase P0 and of a complementary polymer phase P'1 and that the composition of said phase P0 is devoid of said monomers M1 and M2 and that, with regard to the remainder, the compositions of P0 and P'1 are identical or different.

4. Dispersion according to one of Claims 1 to 3, **characterized in that** the overall content of said first and second transfer agents represents, by weight, from 0.02 to 2% and preferably from 0.05 to 1.5%, with respect to the total weight of the monomers of said dispersion (phases P1+P2).

5. Dispersion according to one of Claims 1 to 4, **characterized in that**, for a content by weight of P1 exceeding 35% and preferably exceeding 30%, said Tg1 remains below 75°C.

6. Dispersion according to one of Claims 1 to 5, **characterized in that** the difference between said Tg1 and Tg2 values varies from 20 to 140°C and preferably from 30 to 115°C.

7. Dispersion according to one of Claims 1 to 6, **characterized in that** the monomer M1 of the phase P1 is chosen from monofunctional or polyfunctional allyl ester monomers derived from α,β-unsaturated carboxylic or dicarboxylic acids or polyfunctional allyl esters of saturated di- or polycarboxylic acids or other polyallyl monomers, polyfunctional (meth)acrylic esters with a functionality of at least 2 and polyvinylbenzenes.

8. Dispersion according to one of Claims 1 to 7, **characterized in that** said monomer M2 of the phase P1 is chosen from (meth)acrylic, fumaric, maleic, itaconic, vinylbenzoic, crotonic or isocrotonic acids and/or their anhydrides and preferably methacrylic acid and/or acrylic acid.

9. Dispersion according to one of Claims 1 to 8, **characterized in that** said monomers M1 and M2 of the phase P1 represent an overall content by weight ranging from 0.5 to 10% and preferably from 1 to 8% of the total weight of the phase P1 with said monomer M2 representing from 0.1 to 5% and preferably from 0.2 to 4% by weight of said phase P1.

10. Dispersion according to one of Claims 1 to 9, **characterized in that** the phase P2 also comprises at least one monomer M2 as defined according to Claim 1 or 7, with respective contents by weight of M2 in the phases P1 and P2 chosen so that the ratio of the content by weight of M2 in P1 to that in P2 varies from 1/1 to 1/10 and preferably from 1/2 to 1/8.

11. Dispersion according to one of Claims 1 to 10, **characterized in that** said monomer M3 is present in said phase P2 at a content by weight of 1 to 25%, preferably of 1 to 15%, expressed with respect to the total weight of P1+P2, and with a percentage, expressed with respect to P2, ranging from 1 to 60% and preferably from 1.5 to 40%.

12. Dispersion according to one of Claims 1 to 11, **characterized in that** said monomer M3 carries an acetoacetoxy group quantitatively converted into the enamine group masked form in situ during the polymerization corresponding to phase P2 and **in that**, in this case, said phase P2 is devoid of any monomer M2 as defined according to Claims 1 or 8.

13. Dispersion according to one of Claims 1 to 12, **characterized in that** said phase P1 also comprises at least one monomer M3 carrying an acetoacetoxy group.

14. Dispersion according to Claim 13, **characterized in that** said acetoacetoxy group of the phase P1 is quantitatively converted into the enamine masked form during the polymerization corresponding to the phase P2.

15. Dispersion according to one of Claims 1 to 14, **characterized in that** said phase P2 additionally comprises at least one monomer M4 carrying, in addition to the polymerizable ethylenic unsaturation, at least one functional group selected from: hydroxyl, amine, oxirane, phosphates, phosphonates or phosphinates, amide, sulfate or sulfonate, imide, aziridine, oxazoline or imidazole, provided that the choice of the monomers M4 is made so as to avoid a reaction between the various groups of the monomers M4 or between the groups of the monomers M4 and the groups of the other monomers.

16. Dispersion according to one of Claims 1 to 15, **characterized in that** said phase P2 additionally comprises at least one monomer M5 selected from at least one oil (glycerol esters) of unsaturated C₁₀ to C₃₆ fatty acids and/or methyl esters corresponding to these acids, preferably at least one linseed oil or one methyl ester of linoleic acid and/or linolenic acid.

17. Dispersion according to one of Claims 1 to 16, **characterized in that** said phase P2 comprises both the monomer M3 under the conditions as defined according to Claim 11 and the monomer M5 as defined according to Claim 16.

18. Process for the preparation of a dispersion as defined according to one of Claims 1 to 17, **characterized in that** it comprises at least the three following stages:
i) a seeding stage comprising a prepolymerization of a seed composition P0 devoid of monomers M1 and M2 and with seed particles having a size of less than or equal to 30 nm, and representing a content by weight ranging from 2 to 25% and preferably from 5 to 20% of the weight of said phase P1,
ii) a stage of polymerization of a monomer composition P'1 comprising said monomers M1 and M2 and giving the polymer phase P'1, thus constituting, with the seed polymer P0 obtained in stage i), said polymer phase P1 of said particle core, it being possible for said monomer composition P'1, apart from the presence of the monomers M1 and M2, to be identical to or different from that of said seed composition P0,
iii) a stage of polymerization of a monomer composition P2, giving rise to said phase P2.

19. Process according to Claim 18, **characterized in that**:
- the seeding stage i) is carried out in the presence of from 0.1 to 1.5% by weight and preferably from 0.3 to 1.2% by weight of the total weight of P1+P2 of at least one anionic surfactant,
- the stage ii) of polymerization of the monomer composition P'1 is carried out in the presence of from 0.1 to 3% by weight and preferably 0.1 to 1.5% by weight of the total weight of P1+P2 of at least one anionic surfactant, which can be the same as or different from that of the seed P0, and of a second anionic surfactant different from the first, with the content by weight of these two anionic surfactants of P1 remaining between 0.1 and 3%, preferably between 0.1 and 1.5%, of the total weight of P1+P2,
- the stage iii) of polymerization of the monomer composition P2 is carried out in the presence of from 0.1 to 3% by weight and preferably from 0.2 to 2.5% by weight of the total weight of P1+P2 of at least two surfactants:
a) the first being nonionic and preferably chosen from alkoxylated fatty alcohols, preferably alkoxylated C₁₂ to C₁₆ fatty alcohols, with, as preferred alkoxy units, ethoxy and/or propoxy units and more preferably ethoxy units, the number of said alkoxy units preferably being from 3 to 50 and more preferably from 5 to 40 ethoxy units,
b) the second being anionic and being able to be identical to or different from that defined for P0.

20. Process according to either of Claims 18 and 19, **characterized in that**:
- stages i) and ii) are carried out at a temperature of 75 to 90°C,
- the stage iii) of polymerization of said monomer composition P2 is carried out at a temperature below Tg1, when said process is carried out at atmospheric pressure.

21. Process according to one of Claims 18 to 20, **characterized in that** the stage ii) of emulsion polymerization of the monomer composition P'1 (preferably P1) is continued up to a degree of conversion of at least 95%, before addition of the monomer composition P2.

22. Aqueous polymer dispersion, **characterized in that** it comprises at least one aqueous polymer dispersion as defined according to one of Claims 1 to 17 or as obtained by a process as defined according to one of Claims 18 to 21 and **in that** it additionally comprises at least one other second aqueous polymer dispersion, preferably with a polymer based on saturated and/or unsaturated polyester resins, preferably based on unsaturated polyesters and more preferably on alkyd resins, based on acrylic copolymers, based on acrylated acrylic oligomers, based on polyurethanes or based on hydrocarbon resins.

23. Dispersion according to Claim 22, **characterized in that** said second aqueous polymer dispersion is based on at least one modified or unmodified alkyd resin.

24. Aqueous dispersion according to Claim 23, **characterized in that** the content by weight of said alkyd resin represents from 15 to 45% of the alkyd + polymer (alkyd+P1+P2) total of the dispersion as defined according to one of Claims 1 to 17.

25. Aqueous dispersion according to Claim 23 or 24, **characterized in that** said aqueous dispersion comprises, as polymer dispersion, at least one aqueous dispersion as defined according to Claim 16.

26. Coating or treatment composition, **characterized in that** it comprises at least one aqueous dispersion as defined according to one of Claims 1 to 17 or according to Claims 23 to 25.

27. Coating composition according to Claim 26, **characterized in that** it is a protective and/or decorative coating composition selected from paints, varnishes, transparent coatings, inks or adhesives.

28. Composition according to Claim 27, **characterized in that** it is a composition for the treatment of fibres.

29. Use of an aqueous dispersion as defined according to one of Claims 1 to 17 or according to Claims 23 to 25, **characterized in that** it is the use in protective and/or decorative coatings or the use in the treatment of fibres.

30. Coating, **characterized in that** it is obtained by the use of at least one dispersion as defined according to one of Claims 1 to 17 or according to one of Claims 23 to 25 or by the use of a coating composition as defined according to one of Claims 26 to 28.

31. Coated substrate, **characterized in that** it is coated with at least one layer of at least one coating composition as defined according to one of Claims 26 to 28.

32. Treated fibre, **characterized in that** it is treated with at least one treatment composition as defined according to Claim 28.
